# EUROPEAN PATENT APPLICATION

(11) **EP 2 922 174 A1**
(43) Date of publication of application: **23.09.2015**
(21) Application number: 12888512.6
(22) Date of filing: 15.11.2012
(51) Int. Cl.: H02J 17/00

(54) **NON-CONTACT POWER SUPPLY SYSTEM AND CONTROL METHOD FOR NON-CONTACT POWER SUPPLY SYSTEM**

(71) Applicant: The Chugoku Electric Power Co., Inc., Hiroshima-shi, Hiroshima 730-8701 (JP)
(72) Inventor: MASAOKA, Shinya, Hiroshima-shi, Hiroshima 730-8701 (JP); MITO, Katsuhiko, Hiroshima-shi, Hiroshima 730-8701 (JP); KOUNO, Nobuyuki, Hiroshima-shi, Hiroshima 730-8701 (JP); OKUBO, Norihiro, Hiroshima-shi, Hiroshima 730-8701 (JP); NAITO, Masaki, Hiroshima-shi, Hiroshima 730-8701 (JP)
(74) Representative: Charlton, Peter John
(86) International application number: PCT/JP2012/079683
(87) International publication number: WO 2014/076802

(57) **Abstract**

[Problem to be Solved]

To efficiently perform non-contact power supply that is carried out using a relay apparatus.

[Solution]

A non-contact power supply system 1 compares transmission efficiency between a case of a first route mode of indirectly supplying power from a power supply apparatus 10 to a power receiving apparatus 20 through a relay apparatus 30 and a case of a second route mode of directly supplying power without interposing the relay apparatus 30, and selects a route of higher transmission efficiency to supply the power. In the case of the first route mode, a power supply circuit 14 of the power supply apparatus 10 and a power receiving circuit 31 of the relay apparatus 30 are made to resonate, and a power transmission circuit 32 of the relay apparatus 30 and a power receiving circuit 21 of the power receiving apparatus 20 are made to resonate, but the power supply circuit 14 of the power supply apparatus 10 and the power receiving circuit 21 of the power receiving apparatus 20 are not allowed to resonate. In the case of the second route mode, the power supply circuit 14 of the power supply apparatus 10 and the power receiving circuit 21 of the power receiving apparatus 20 are made to resonate, but the power supply circuit 14 of the power supply apparatus 10 and the power receiving circuit 31 of the relay apparatus 30 are not allowed to resonate.

## Description

### Technical Field

The present invention relates to a non-contact power supply system and a control method for the non-contact power supply system, and particularly relates to a technique for efficiently supplying power in the case of providing a relay apparatus to perform non-contact power supply from a power supply apparatus to a power receiving apparatus.

### Background Art

Regarding non-contact power supply of supplying power from a power supply apparatus to a power receiving apparatus in a non-contact manner, for example, Patent Literature 1 describes a wireless charging system including a wireless charging apparatus including a power transmission device that transmits power for charging, a power receiving apparatus that includes a power receiving device which receives the power transmitted from the wireless charging apparatus by a magnetic resonance relation and that charges the received power to a battery, and a relay device capable of relaying the transmission power of the power transmission device of the wireless charging apparatus.

Patent Literature 2 describes that, in a wireless system including a sheet-like body, a power transmission side resonance coil that is supplied with power and transmits the power, and at least one relay coil capable of receiving and transmitting the transmitted power by a magnetic resonance relation, the power transmission side resonance coil and the relay coil are formed in a sheet shape, and the power transmission side resonance coil and the relay coil are arranged on the sheet-like body at a predetermined interval.

Patent Literature 3 describes that, in a wireless power supply system including a power transmission device including a first resonance element that is supplied with power and transmits the power, a relay device including a second resonance element that receives and transmits the transmitted power by a magnetic resonance relation, and a power receiving device including a third resonance element that receives the power transmitted from the relay device by the magnetic resonance relation, the relay device adjusts at least one of an arrangement angle and an arrangement position of the second resonance element according to power transmission information of at least one of the power transmission device and the power receiving device.

### Citation List

### Patent Literature

Patent Literature 1: Japanese Patent Laid-Open No. 2011-160505
Patent Literature 2: Japanese Patent Laid-Open No. 2011-151989
Patent Literature 3: Japanese Patent Laid-Open No. 2011-147280

### Summary of Invention

### Technical Problem

Transmission efficiency of non-contact power supply changes depending on an environment in which the non-contact power supply is performed, and relative positional relations of individual apparatuses (a power supply apparatus, a relay apparatus, and a power receiving apparatus) or the like. Also, depending on influence of interference of power supplied through different routes with each other, multipath, reflected waves, or the like, there is a case that the transmission efficiency is rather lowered by providing a relay apparatus.

The present invention has been made in consideration of such a background, and an object of the present invention is to provide a non-contact power supply system capable of efficiently supplying power in the case of providing a relay apparatus and performing non-contact power supply from a power supply apparatus to a power receiving apparatus, and a control method for the non-contact power supply system.

### Solution to Problem

One aspect of the present invention for achieving the object is a non-contact power supply system including a power supply apparatus, a power receiving apparatus, and a relay apparatus, in which transmission efficiency in the case of performing non-contact power supply in a first route mode which is a mode of not performing direct non-contact power supply from the power supply apparatus to the power receiving apparatus but performing indirect non-contact power supply from the power supply apparatus to the power receiving apparatus through the relay apparatus, and transmission efficiency in the case of performing the non-contact power supply in a second route mode which is a mode of not performing the indirect non-contact power supply from the power supply apparatus to the power receiving apparatus through the relay apparatus but performing the direct non-contact power supply from the power supply apparatus to the power receiving apparatus are acquired, the mode of higher transmission efficiency is selected from the first route mode and the second route mode, and the non-contact power supply is performed from the power supply apparatus to the power receiving apparatus.

According to the present invention, since the mode of the higher transmission efficiency is selected from the first route mode and the second route mode and the non-contact power supply is performed, the non-contact power supply can be efficiently performed from the power supply apparatus to the power receiving apparatus.

Also, another aspect of the present invention is the non-contact power supply system, the power supply apparatus, the power receiving apparatus, and the relay apparatus transmit or receive the supply power in a magnetic resonance mode, and in the case of performing the non-contact power supply in the first route mode, a power supply circuit of the power supply apparatus and a power receiving circuit of the relay apparatus are made to resonate, a power transmission circuit of the relay apparatus and a power receiving circuit of the power receiving apparatus are made to resonate, and the power supply circuit of the power supply apparatus and the power receiving circuit of the power receiving apparatus are not allowed to resonate, and in the case of performing the non-contact power supply in the second route mode, the power supply circuit of the power supply apparatus and the power receiving circuit of the power receiving apparatus are made to resonate, and the power supply circuit of the power supply apparatus and the power receiving circuit of the relay apparatus are not allowed to resonate.

In this way, by switching the first route mode and the second route mode by controlling whether or not to make the power supply circuit of the power supply apparatus and the power receiving circuit of the relay apparatus, and the power supply circuit of the power supply apparatus and the power receiving circuit of the power receiving apparatus resonate, a mechanism of switching the first route mode and the second route mode can be easily achieved.

Also, another aspect of the present invention is the non-contact power supply system, and in the case of performing the non-contact power supply in the first route mode, the power supply circuit of the power supply apparatus and the power receiving circuit of the relay apparatus are made to resonate at a second frequency, the power transmission circuit of the relay apparatus and the power receiving circuit of the power receiving apparatus are made to resonate at a first frequency, and the power supply circuit of the power supply apparatus and the power receiving circuit of the power receiving apparatus are not allowed to resonate, and in the case of performing the power supply in the second route mode, the power supply circuit of the power supply apparatus and the power receiving circuit of the power receiving apparatus are made to resonate at the first frequency, and the power supply circuit of the power supply apparatus and the power receiving circuit of the relay apparatus are not allowed to resonate.

According to the present invention, since the frequency of the power received by the power receiving apparatus does not change (the power is received at the first frequency at all times) in both of the case of performing the non-contact power supply in the first route mode and the case of performing the non-contact power supply in the second route mode, the need of providing a mechanism of changing the frequency in the power receiving circuit of the power receiving apparatus and the power transmission circuit of the relay apparatus is eliminated, and the power receiving apparatus and the relay apparatus can be simply configured.

Also, another aspect of the present invention is the non-contact power supply system, and in the case of performing the non-contact power supply in the first route mode, the power supply circuit of the power supply apparatus and the power receiving circuit of the relay apparatus are made to resonate at the first frequency, the power transmission circuit of the relay apparatus and the power receiving circuit of the power receiving apparatus are made to resonate at the second frequency, and the power supply circuit of the power supply apparatus and the power receiving circuit of the power receiving apparatus are not allowed to resonate, and in the case of performing the power supply in the second route mode, the power supply circuit of the power supply apparatus and the power receiving circuit of the power receiving apparatus are made to resonate at the first frequency, but the power supply circuit of the power supply apparatus and the power receiving circuit of the relay apparatus are not allowed to resonate.

According to the present invention, since the frequency of the power supplied by the power supply apparatus does not change (the first frequency at all times) in both of the case of performing the non-contact power supply in the first route mode and the case of performing the non-contact power supply in the second route mode, the need of providing a mechanism of changing the frequency in the power supply circuit of the power supply apparatus and the power receiving circuit of the relay apparatus is eliminated, and the power supply apparatus and the relay apparatus can be simply configured.

Also, another aspect of the present invention is the non-contact power supply system, whether or not to make the power supply circuit of the power supply apparatus and the power receiving circuit of the relay apparatus resonate, and whether or not to make the power transmission circuit of the relay apparatus and the power receiving circuit of the power receiving apparatus resonate are carried out by changing capacitance of a capacitive element or inductance of an inductive element for at least one of the power supply circuit of the power supply apparatus, the power receiving circuit of the relay apparatus, the power transmission circuit of the relay apparatus, and the power receiving circuit of the power receiving apparatus.

In this way, whether or not to make the power supply circuit of the power supply apparatus and the power receiving circuit of the relay apparatus resonate, and whether or not to make the power transmission circuit of the relay apparatus and the power receiving circuit of the power receiving apparatus resonate can be easily achieved by changing capacitance of a capacitive element or inductance of an inductive element for at least one of the power supply circuit of the power supply apparatus, the power receiving circuit of the relay apparatus, the power transmission circuit of the relay apparatus, and the power receiving circuit of the power receiving apparatus.

Also, another aspect of the present invention is the non-contact power supply system, the relay apparatus includes a mechanism of controlling orientation of the power receiving circuit that receives supply power transmitted from the power supply apparatus, and a received power amount of the supply power in the relay apparatus is attenuated by controlling the orientation of the power receiving circuit of the relay apparatus, in the case of performing the non-contact power supply in the second route mode.

In this way, the mechanism of switching the first route mode and the second route mode can be achieved by controlling the orientation of the power receiving circuit of the relay apparatus.

Also, another aspect of the present invention is the non-contact power supply system, a first attenuation control unit that attenuates a received power amount of supply power transmitted from the power supply apparatus in the relay apparatus, and a second attenuation control unit that attenuates a received power amount of supply power transmitted from the power supply apparatus in the power receiving apparatus are provided, and in the case of performing the non-contact power supply in the first route mode, the received power amount of the supply power transmitted from the power supply apparatus in the power receiving apparatus is attenuated by the second attenuation control unit, and in the case of performing the non-contact power supply in the second route mode, the received power amount of the supply power transmitted from the power supply apparatus in the relay apparatus is attenuated by the first attenuation control unit.

In this way, the mechanism of switching the first route mode and the second route mode can be achieved also by attenuating the received power amount of the relay apparatus or the received power amount of the power receiving apparatus. The received power amount can be attenuated by providing a shield plate between the power supply apparatus and the relay apparatus or between the power supply apparatus and the power receiving apparatus, for example.

Also, another aspect of the present invention is the non-contact power supply system, the transmission efficiency in the first route mode, the transmission efficiency in the second route mode, and transmission efficiency in the case of performing the non-contact power supply by a combination mode which is a mode of performing the direct non-contact power supply from the power supply apparatus to the power receiving apparatus and performing the indirect non-contact power supply from the power supply apparatus to the power receiving apparatus through the relay apparatus are acquired, the mode of the maximum transmission efficiency is selected among the first route mode, the second route mode, and the combination mode, and the non-contact power supply is performed from the power supply apparatus to the power receiving apparatus.

According to the present invention, since the mode of the maximum transmission efficiency is selected among the first route mode, the second route mode, and the combination mode and the non-contact power supply is performed from the power supply apparatus to the power receiving apparatus, the non-contact power supply can be efficiently performed from the power supply apparatus to the power receiving apparatus.

Other problems and solutions thereof disclosed by the present application will be made clear by the description of embodiments and the drawings.

### Advantageous Effects of Invention

According to the present invention, in the case of providing a relay apparatus and performing non-contact power supply, power can be efficiently supplied from a power supply apparatus to a power receiving apparatus.

### Brief Description of Drawings

[Figure 1] Figure 1 is a diagram illustrating a schematic configuration of a non-contact power supply system 1.
[Figure 2] Figure 2 is a diagram illustrating hardware of a power supply apparatus 10.
[Figure 3] Figure 3 is a diagram illustrating functions that the power supply apparatus 10 has.
[Figure 4] Figure 4 is a diagram illustrating hardware of a power receiving apparatus 20.
[Figure 5] Figure 5 is a diagram illustrating functions that the power receiving apparatus 20 has.
[Figure 6] Figure 6 is a diagram illustrating hardware of a relay apparatus 30.
[Figure 7] Figure 7 is a diagram illustrating functions that the relay apparatus 30 has.
[Figure 8] Figure 8 is a diagram illustrating a method of non-contact power supply by a combination mode.
[Figure 9] Figure 9 is a diagram illustrating a method of non-contact power supply in a first route mode and a second route mode.
[Figure 10] Figure 10 is a flowchart illustrating a non-contact power supply process S10.
[Figure 11] Figure 11 is a flowchart illustrating the non-contact power supply process S10.
[Figure 12] Figure 12 is a flowchart illustrating the non-contact power supply process S10.
[Figure 13] Figure 13 is a flowchart illustrating a transmission efficiency acquisition process S821.
[Figure 14] Figure 14 is a flowchart illustrating the transmission efficiency acquisition process S821.
[Figure 15] Figure 15 is a flowchart illustrating the transmission efficiency acquisition process S821.
[Figure 16] Figure 16 is a flowchart illustrating a non-contact power supply process S20.
[Figure 17] Figure 17 is a flowchart illustrating the non-contact power supply process S20.
[Figure 18] Figure 18 is a flowchart illustrating the non-contact power supply process S20.
[Figure 19] Figure 19 is a flowchart illustrating a transmission efficiency acquisition process S1521.
[Figure 20] Figure 20 is a flowchart illustrating the transmission efficiency acquisition process S1521.
[Figure 21] Figure 21 is a flowchart illustrating the transmission efficiency acquisition process S1521.
[Figure 22] Figure 22 is a diagram illustrating power supply in the combination mode.
[Figure 23] Figure 23 is a diagram illustrating power supply in the first route mode and power supply in the second route mode.
[Figure 24] Figure 24 is a flowchart illustrating a non-contact power supply process S30.
[Figure 25] Figure 25 is a flowchart illustrating the non-contact power supply process S30.
[Figure 26] Figure 26 is a flowchart illustrating the non-contact power supply process S30.
[Figure 27] Figure 27 is a flowchart illustrating a transmission efficiency acquisition process S2321.
[Figure 28] Figure 28 is a flowchart illustrating the transmission efficiency acquisition process S2321.
[Figure 29] Figure 29 is a flowchart illustrating the transmission efficiency acquisition process S2321.
[Figure 30] Figure 30 is a flowchart illustrating a non-contact power supply process S40.
[Figure 31] Figure 31 is a flowchart illustrating the non-contact power supply process S40.
[Figure 32] Figure 32 is a flowchart illustrating the non-contact power supply process S40.
[Figure 33] Figure 33 is a flowchart illustrating a transmission efficiency acquisition process S2921.
[Figure 34] Figure 34 is a flowchart illustrating the transmission efficiency acquisition process S2921.
[Figure 35] Figure 35 is a flowchart illustrating the transmission efficiency acquisition process S2921.

### Description of Embodiments

### «First embodiment»

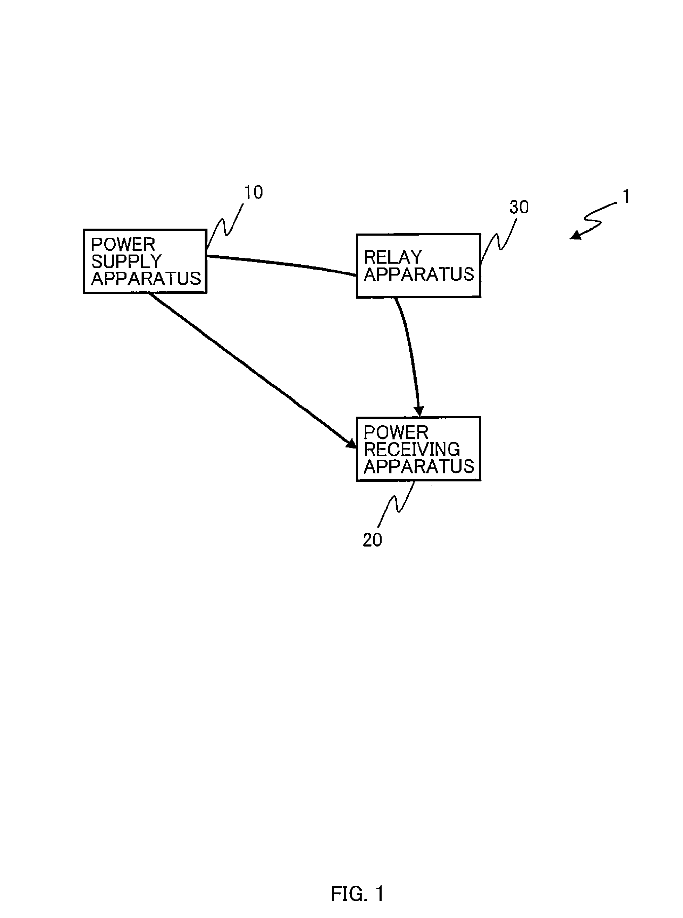

Figure 1 illustrates a schematic configuration of a non-contact power supply system 1 to be described as the first embodiment. As illustrated in the figure, the non-contact power supply system 1 includes a power supply apparatus 10 that supplies power in a non-contact mode, a power receiving apparatus 20 that receives supply of power from the power supply apparatus 10, and a relay apparatus 30 provided for the purpose of improving transmission efficiency of power from the power supply apparatus 10 to the power receiving apparatus 20. The power receiving apparatus 20 is, for example, a cellular phone, a personal digital assistant, a small-sized household electrical appliance, an electric automobile, or the like. A power supply mode of non-contact power supply is, for example, an electromagnetic wave mode, a magnetic resonance mode, or an electromagnetic induction mode. In the present embodiment, it is assumed that power is supplied in the magnetic resonance mode among them.

As illustrated in the figure, the non-contact power supply system 1 can perform the non-contact power supply from the power supply apparatus 10 to the power receiving apparatus 20 by selecting a mode of the maximum transmission efficiency among a mode (called a first route mode, hereinafter) of not performing direct non-contact power supply from the power supply apparatus 10 to the power receiving apparatus 20 but performing indirect non-contact power supply from the power supply apparatus 10 to the power receiving apparatus 20 through the relay apparatus 30, a mode (called a second route mode, hereinafter) of not performing the indirect non-contact power supply from the power supply apparatus 10 to the power receiving apparatus 20 through the relay apparatus 30 but performing the direct non-contact power supply from the power supply apparatus 10 to the power receiving apparatus 20, and a mode (called a combination mode, hereinafter) of performing the direct non-contact power supply from the power supply apparatus 10 to the power receiving apparatus 20 and performing the indirect non-contact power supply from the power supply apparatus 10 to the power receiving apparatus 20 through the relay apparatus 30.

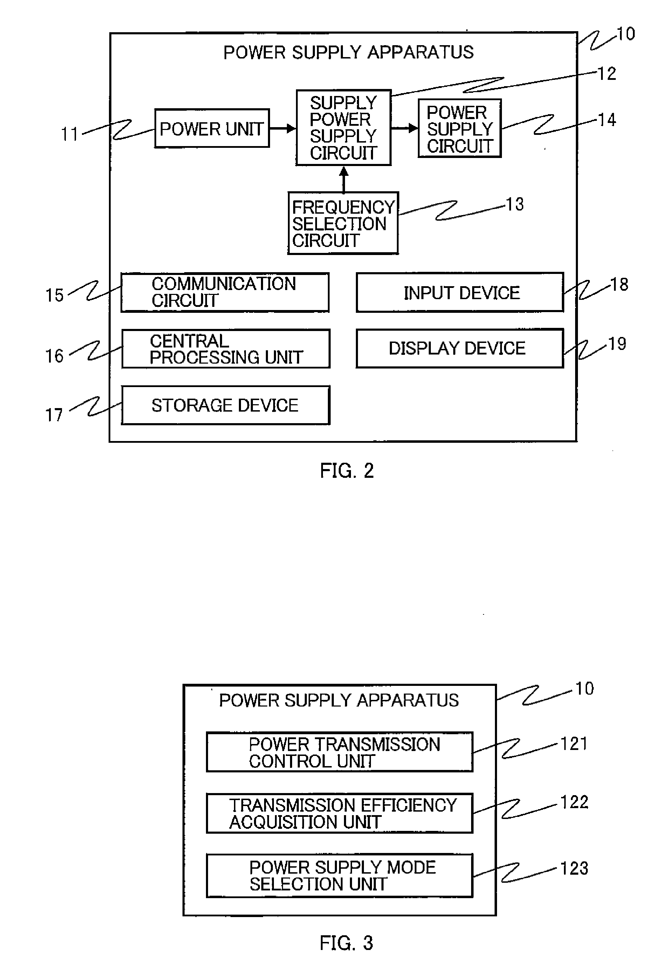

Figure 2 illustrates hardware of the power supply apparatus 10. As illustrated in the figure, the power supply apparatus 10 includes a power unit 11, a supply power supply circuit 12, a frequency selection circuit 13, a power supply circuit 14, a communication circuit 15, a central processing unit 16, a storage device 17, an input device 18, and a display device 19.

The power unit 11 is, for example, a power source of a switching mode or a linear mode, and supplies power for driving components of the power supply apparatus 10. The supply power supply circuit 12 includes a driver circuit (a gate driver, a half-bridge driver, or the like), and generates a driving current to be supplied to the power supply circuit 14 on the basis of the power supplied from the power unit 11.

The frequency selection circuit 13 selects a switching frequency of driving power to be supplied to the power supply circuit 14. The frequency selection circuit 13 is configured using a frequency synthesizer of, for example, an analog mode, a PLL mode (PLL: Phase Locked Loop), or a DDS mode (Direct Digital Synthesizer). A frequency of supply power can be switched by switching the switching frequency of the driving power to be supplied to the power supply circuit 14.

The power supply circuit 14 includes a resonant circuit configured using a capacitive element such as a capacitor or an inductive element such as a coil, for example. A resonance frequency of the resonant circuit is set at the switching frequency of the driving power supplied from the power supply circuit 14.

The communication circuit 15 performs communication (for example, wireless LAN (LAN: Local Area Network), communication by IEEE 802.15.1 standard, communication by IEEE 802.15.4 standard) with the power receiving apparatus 20 and the relay apparatus 30. The communication between the power supply apparatus 10 and the power receiving apparatus 20 and the communication between the power supply apparatus 10 and the relay apparatus 30 may be performed by including information to be transmitted in the supply power (for example, by modulating the supply power by the information to be transmitted).

The central processing unit 16 is configured using a CPU or an MPU, and performs general control of the power supply apparatus 10. The storage device 17 is configured using a RAM, a ROM, an NVRAM, or the like, and stores programs and data. The input device 18 is an input interface such as a touch panel or ten keys, and receives information from a user. The display device 19 is an output interface such as a liquid crystal panel, and provides a user with information.

Figure 3 illustrates main functions that the power supply apparatus 10 has. As illustrated in the figure, the power supply apparatus 10 includes a power transmission control unit 121, a transmission efficiency acquisition unit 122, and a power supply mode selection unit 123. These functions are achieved by the hardware of the power supply apparatus 10, or the central processing unit 16 of the power supply apparatus 10 reading and executing the program stored in the storage device 17.

The power transmission control unit 121 controls the frequency selection circuit 13 and the power supply circuit 14, selects one of a frequency f1 (first frequency) and a frequency f2 (#frequency f1) (second frequency), and transmits the power by the selected frequency.

Also, the power transmission control unit 121 performs control for supplying the power in the combination mode, control for supplying the power in the first route mode, and control for supplying the power in the second route mode. Detail of the control will be described later.

The transmission efficiency acquisition unit 122 acquires the transmission efficiency of power supply in the combination mode (called combination mode transmission efficiency, hereinafter), the transmission efficiency of power supply in the first route mode (called first route transmission efficiency, hereinafter), and the transmission efficiency of power supply in the second route mode (called second route transmission efficiency, hereinafter).

The power supply mode selection unit 123 selects the mode of the maximum transmission efficiency among the first route mode, the second route mode, and the combination mode, on the basis of the transmission efficiency (the combination mode transmission efficiency, the first route transmission efficiency, and the second route transmission efficiency) acquired by the transmission efficiency acquisition unit 122, and performs the non-contact power supply from the power supply apparatus 10 to the power receiving apparatus 20.

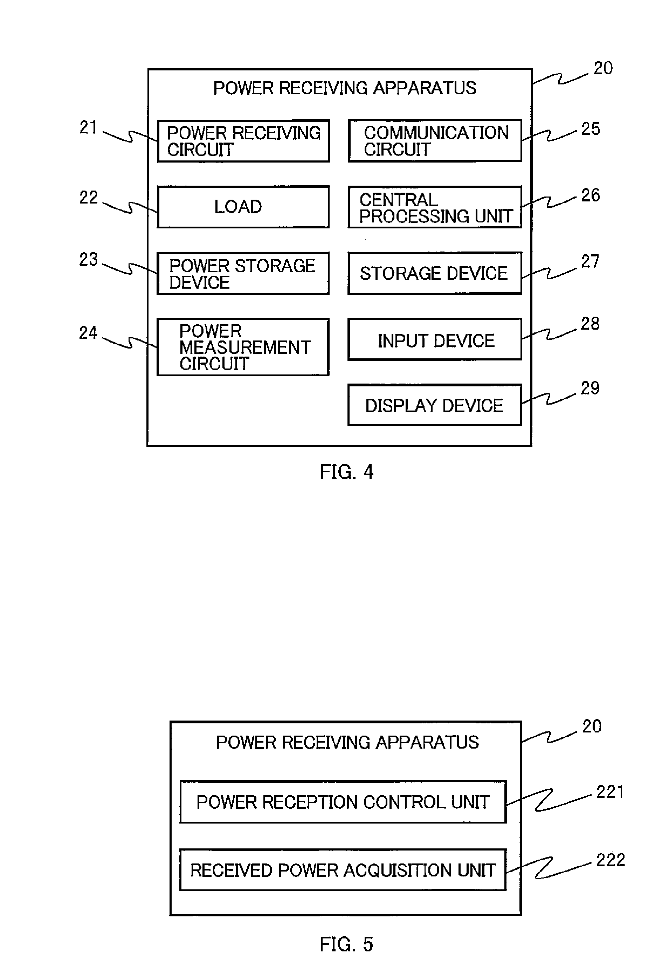

Figure 4 illustrates hardware of the power receiving apparatus 20. As illustrated in the figure, the power receiving apparatus 20 includes a power receiving circuit 21, a load 22, a power storage device 23, a power measurement circuit 24, a communication circuit 25, a central processing unit 26, a storage device 27, an input device 28, and a display device 29.

Among them, the power receiving circuit 21 includes a resonant circuit configured using a capacitive element such as a capacitor or an inductive element such as a coil, and receives the power of the frequency f1 transmitted from the power supply apparatus 10 (including the case of being transmitted from the power supply apparatus 10 through the relay apparatus 30).

The load 22 is a circuit or an element that consumes the power supplied from the power supply apparatus 10, for example, and when the power receiving apparatus 20 is a cellular phone, the load 22 is a circuit (a control circuit, a transmission/reception circuit, a display circuit, or the like) provided in the cellular phone, for example.

The power storage device 23 includes a storage battery such as a secondary battery (a lithium-ion battery, a lithium polymer battery, a nickel hydrogen battery, a nickel cadmium battery, or the like) or a capacitive element (an electric double layer capacitor or the like), a rectifier circuit for supplying, to the storage battery, a current based on electromotive force generated in the power receiving circuit 21, a smoothing circuit, a power supply circuit such as a DC/AC converter or a DC/DC converter, or the like. The power storage device 23 is, for example, a secondary battery (a lithium-ion battery, a lithium polymer battery, a nickel hydrogen battery, a nickel cadmium battery, or the like), a battery (an electric double layer capacitor or the like) formed by a capacitive element, or the like. The power receiving apparatus 20 may not be surely provided with the power storage device 23. The power receiving apparatus 20 may be the one configured to directly supply the current based on the electromotive force generated in the power receiving circuit 21 to the load 22 like a non-contact type IC card or a passive type RFID tag, for example.

The power measurement circuit 24 measures a power value of the received power.

The communication circuit 25 performs communication (for example, wireless LAN, communication by IEEE 802.15.1 standard, communication by IEEE 802.15.4 standard) with the power supply apparatus 10 and the relay apparatus 30.

The central processing unit 26 is configured using a CPU or an MPU, and performs general control of the power receiving apparatus 20. The storage device 27 is configured using a RAM, a ROM, an NVRAM, or the like, and stores programs and data. The input device 28 is an input interface such as a keyboard or a touch panel. The display device 29 is an output interface such as a liquid crystal panel.

Figure 5 illustrates main functions that the power receiving apparatus 20 has. As illustrated in the figure, the power receiving apparatus 20 includes a power reception control unit 221, and a received power acquisition unit 222. These functions are achieved by the hardware of the power receiving apparatus 20, or the central processing unit 26 of the power receiving apparatus 20 reading and executing the program stored in the storage device 27.

The power reception control unit 221 controls the power receiving circuit 21, and supplies the electromotive force generated in the power receiving circuit 21 to the load 22 or the power storage device 23.

The received power acquisition unit 222 acquires the power value of the power measured by the power measurement circuit 24.

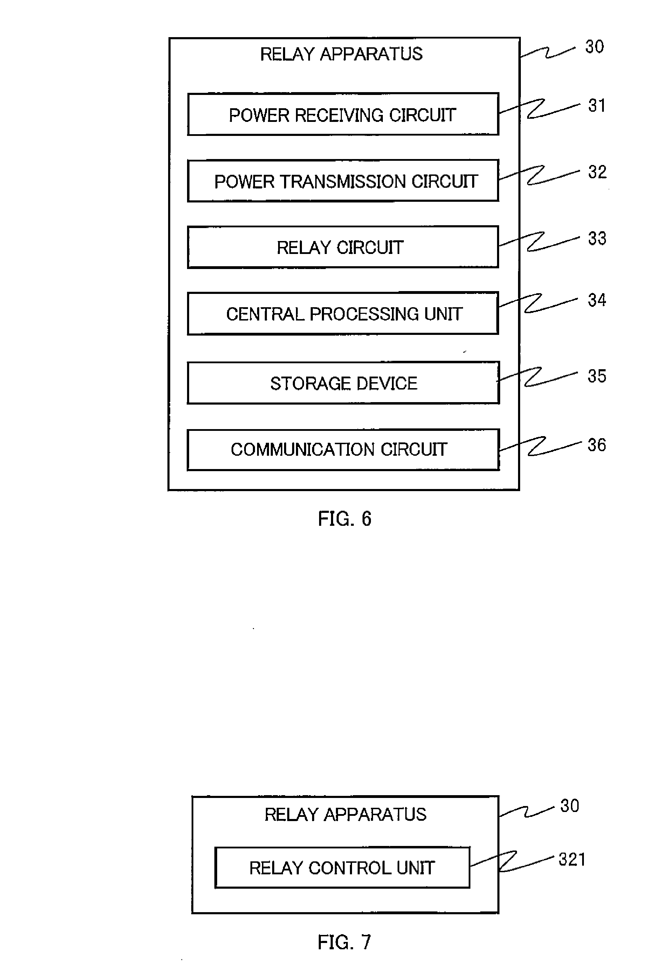

Figure 6 illustrates hardware of the relay apparatus 30. As illustrated in the figure, the relay apparatus 30 includes a power receiving circuit 31, a power transmission circuit 32, a relay circuit 33, a central processing unit 34, a storage device 35, and a communication circuit 36.

The power receiving circuit 31 includes a resonant circuit configured using a capacitive element such as a capacitor or an inductive element such as a coil, and receives the power (the power of the frequency f1, or the power of the frequency f2) transmitted from the power supply apparatus 10.

The power transmission circuit 32 includes a resonant circuit configured using a capacitive element such as a capacitor or an inductive element such as a coil. The power transmission circuit 32 transmits the supply power by the frequency f1.

The relay circuit 33 inputs the power received by the power receiving circuit 31 to the power transmission circuit 32. The relay circuit 33 includes a circuit that converts the power of the frequency f2 received by the power receiving circuit 31 to a direct current, a circuit that converts the power converted to the direct current to the power of the frequency f1, and a circuit that inputs the converted power to the power transmission circuit 32 (a rectifier circuit, an inverse conversion circuit (inverter or the like) or the like).

The central processing unit 34 is configured using a CPU or an MPU or the like, and performs general control of the relay apparatus 30. The storage device 35 is configured using a RAM, a ROM, an NVRAM, or the like, and stores programs and data. The communication circuit 36 performs communication (for example, wireless LAN, communication by IEEE 802.15.1 standard, communication by IEEE 802.15.4 standard) with the power supply apparatus 10 and the power receiving apparatus 20.

Figure 7 illustrates main functions that the relay apparatus 30 has. As illustrated in the figure, the relay apparatus 30 includes a relay control unit 321. This function is achieved by the hardware of the relay apparatus 30, or the central processing unit 34 of the relay apparatus 30 reading and executing the program stored in the storage device 35. The relay control unit 321 converts the received power of the frequency f2 to the power of the frequency f1, and transmits the converted power of the frequency f1 to the power receiving apparatus 20.

### <Power supply control mode>

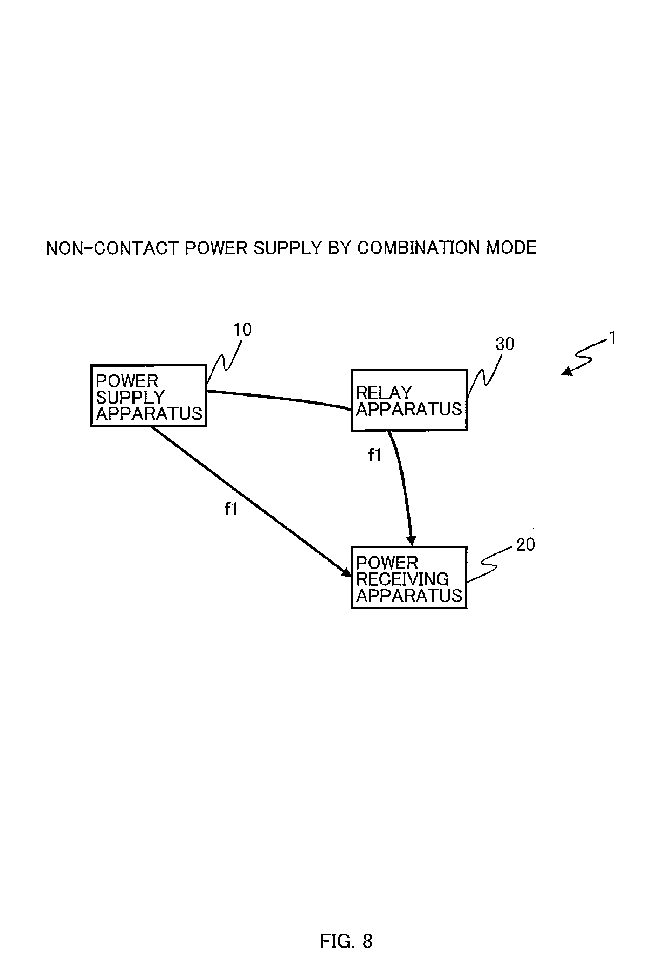

Figure 8 is a diagram illustrating a method of the non-contact power supply in the combination mode described above. In this mode, the power is supplied from the power supply apparatus 10 to the power receiving apparatus 20 by the frequency f1, the power is supplied from the power supply apparatus 10 to the relay apparatus 30 by the frequency f1, and the power is supplied from the relay apparatus 30 to the power receiving apparatus 20 by the frequency f1.

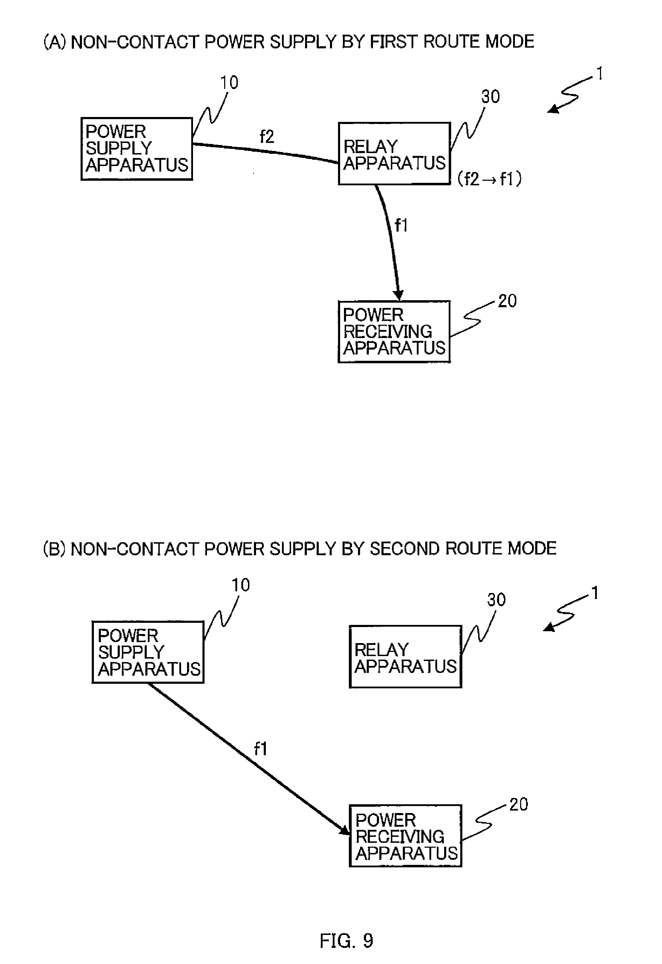

Figure 9(A) is a diagram illustrating a method of the non-contact power supply in the first route mode described above. In this mode, the power is supplied from the power supply apparatus 10 to the relay apparatus 30 by the frequency f2, the power is supplied from the relay apparatus 30 to the power receiving apparatus 20 by the frequency f1, and the relay apparatus 30 converts the power of the frequency f2 transmitted from the power supply apparatus 10 to the power of the frequency f1, and transmits the power to the power receiving apparatus 20.

Figure 9(B) is a diagram illustrating a method of the non-contact power supply in the second route mode described above. In the mode, the power is supplied by the frequency f1 from the power supply apparatus 10 to the power receiving apparatus 20, and (the resonant circuit of) the power supply circuit 14 of the power supply apparatus 10 and (the resonant circuit of) the power receiving circuit 31 of the relay apparatus 30 are not allowed to resonate.

In the following description, it is assumed that whether or not to make the power supply circuit and the power receiving circuit resonate is carried out by changing (adjusting) capacitance of the capacitive element or inductance of the inductive element configuring the power supply circuit or the power receiving circuit.

Subsequently, a process performed in the non-contact power supply system 1 (called a non-contact power supply process S10, hereinafter) will be described.

### <First process example>

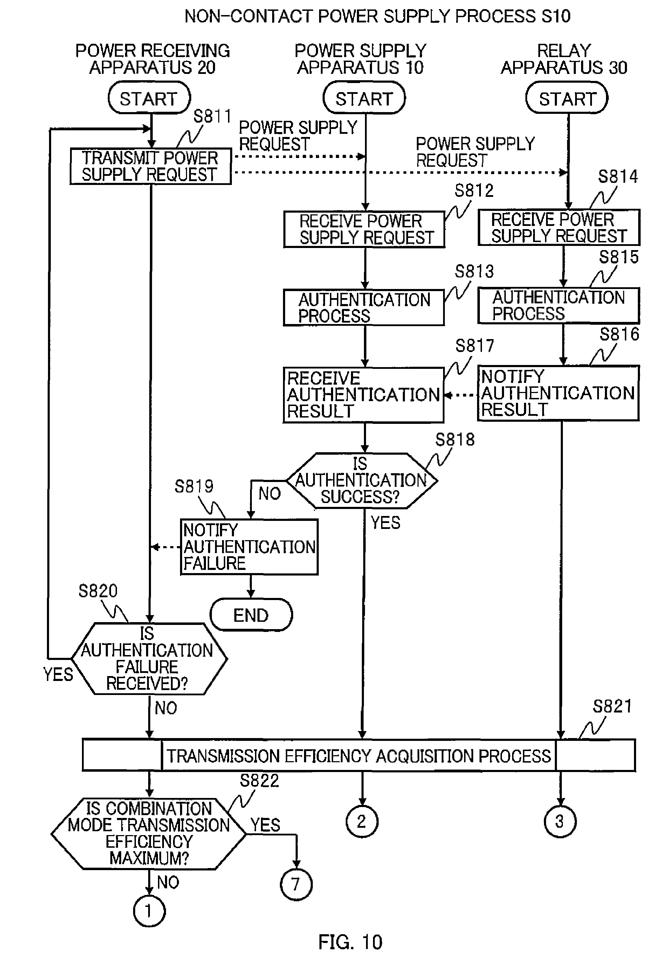

Figure 10 to Figure 15 are flowcharts illustrating the non-contact power supply process S10 to be described as the first process example. Hereinafter, a description will be given with reference to these figures.

Figure 10 to Figure 12 are flowcharts illustrating the entire non-contact power supply process S10 in the first process example. As illustrated in Figure 10, the non-contact power supply process S10 is started by transmission of a power supply request from the power receiving apparatus 20 (S811). For example, in the case that a user performs a predetermined operation to the power receiving apparatus 20 trying to charge the power receiving apparatus 20 such as a cellular phone, the power supply request is transmitted.

When the power supply request is received from the power receiving apparatus 20 (S812), the power supply apparatus 10 authenticates the power receiving apparatus 20 by collating authentication information included in the power supply request with collation information stored in itself (S813). Also, when the power supply request is received from the power receiving apparatus 20 (S814), the relay apparatus 30 authenticates the power receiving apparatus 20 by collating the authentication information included in the received power supply request with collation information stored in itself. A result of authentication performed by the relay apparatus 30 is notified to the power supply apparatus 10 (S815 to S817).

Next, the power supply apparatus 10 determines success or failure of the authentication on the basis of an authentication result of itself in S813 and the authentication result received from the relay apparatus 30 (S818). Specifically, in the case that the authentication is success in both of the power supply apparatus 10 and the relay apparatus 30 (S818: YES), the power supply apparatus 10 determines that the authentication is the success and advances to S821 thereafter. On the other hand, in the case that the authentication in either one is failure (S818: NO), the power supply apparatus 10 determines that the authentication is the failure, and notifies that effect to the power receiving apparatus 20 (S819). Without authenticating the power receiving apparatus 20 in both of the power supply apparatus 10 and the relay apparatus 30 in this way, only the power supply apparatus 10 may perform the authentication.

When a notice of authentication failure is received from the power supply apparatus 10 (S820: YES), the power receiving apparatus 20 outputs that effect to the display device 29, and waits for input of a receiving operation of the power supply request again thereafter (S811).

In S821, the power receiving apparatus 20 acquires the combination mode transmission efficiency, the first route transmission efficiency, and the second route transmission efficiency. Detail of the process (called a transmission efficiency acquisition process S821, hereinafter) will be described later.

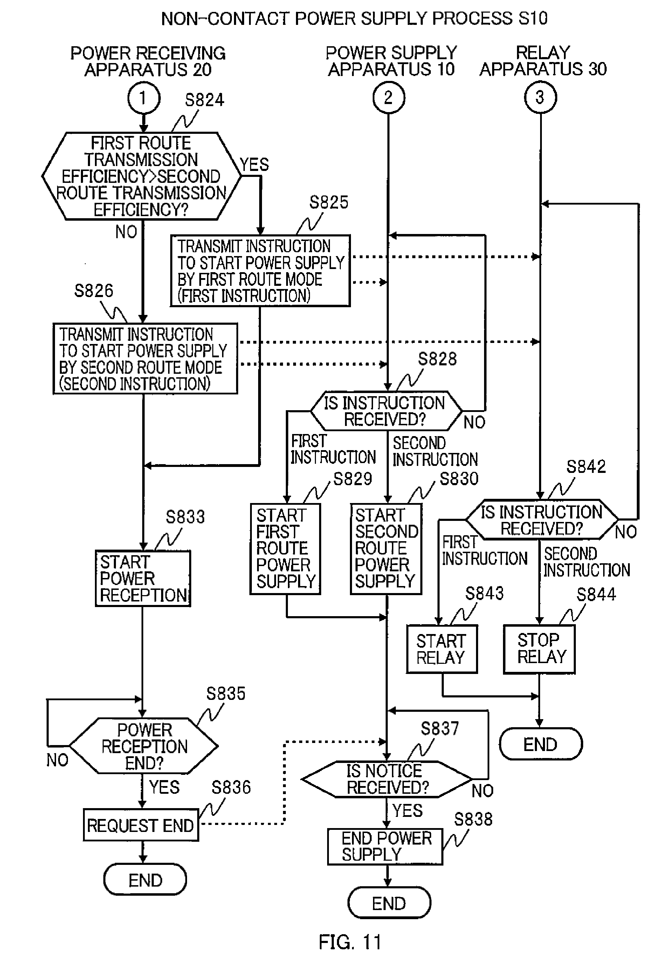

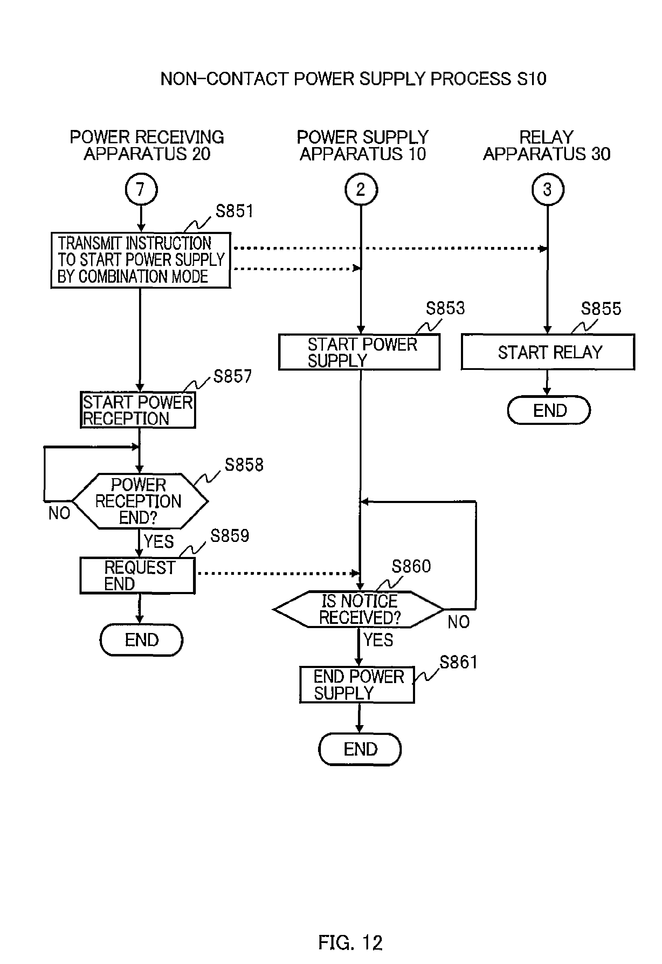

The power receiving apparatus 20 compares the combination mode transmission efficiency, the first route transmission efficiency, and the second route transmission efficiency, that are acquired in the transmission efficiency acquisition process S821, and determines whether or not the combination mode transmission efficiency is the maximum (S822). In the case that the combination mode transmission efficiency is the maximum (S822: YES), the process advances to S851 in Figure 12 so as to supply the power in the combination mode, and on the other hand, in the case that the combination mode transmission efficiency is not the maximum (S822: NO), the process advances to S824 in Figure 11.

In S824, the power receiving apparatus 20 compares the first route transmission efficiency and the second route transmission efficiency that are acquired in S821. As a result of comparison, in the case that the first route transmission efficiency is higher than the second route transmission efficiency (S824: YES), the power receiving apparatus 20 transmits an instruction to start the power supply in the first route mode (called a first instruction, hereinafter) to the power supply apparatus 10 and the relay apparatus 30 (S825). On the other hand, in the case that the first route transmission efficiency is equal to or lower than the second route transmission efficiency (S824: NO), the power receiving apparatus 20 transmits an instruction to start the power supply in the second route mode (called a second instruction, hereinafter) to the power supply apparatus 10 and the relay apparatus 30 (S826).

When the first instruction is received (S828: first instruction), the power supply apparatus 10 starts the power supply in the first route mode (makes the power supply circuit 14 resonate with the power receiving circuit 31 of the relay apparatus 30 at the frequency f2) (S829). On the other hand, when the second instruction is received (S828: second instruction), the power supply apparatus 10 starts the power supply in the second route mode (makes the power supply circuit 14 resonate with the power receiving circuit 21 of the power receiving apparatus 20 at the frequency f1, and does not allow the power supply circuit 14 to resonate with the power receiving circuit 31 of the relay apparatus 30) (S830).

When the first instruction is received from the power receiving apparatus 20 (S842: first instruction), the relay apparatus 30 starts relay of the power received from the power supply apparatus 10 (makes the power receiving circuit 31 resonate with the power supply circuit 14 of the power supply apparatus 10 at the frequency f2, makes the power transmission circuit 32 resonate with the power receiving circuit 21 of the power receiving apparatus 20 at the frequency f1, converts the power of the frequency f2 received from the power supply apparatus 10 to the power of the frequency f1, and transmits it) (S843). On the other hand, when the second instruction is received (S842: second instruction), the relay apparatus 30 does not relay the power from the power supply apparatus 10 (does not allow the power receiving circuit 31 to resonate with the power supply circuit 14 of the power supply apparatus 10) (S844).

When the instruction (the first instruction, or the second instruction) is transmitted, the power receiving apparatus 20 starts reception of the supply power (reception of the power of the frequency f1) (S833).

Thereafter, the power receiving apparatus 20 continues the power reception until a moment to end the power reception comes (S835: NO).

When the moment to end the power reception comes (S835: YES), the power receiving apparatus 20 notifies the power supply apparatus 10 of that effect (S836). When the notice is received (S837: YES), the power supply apparatus 10 stops the power supply (S838).

In S851 in Figure 12, the power receiving apparatus 20 transmits an instruction to start the power supply in the combination mode to the power supply apparatus 10 and the relay apparatus 30.

When the instruction is received, the power supply apparatus 10 starts the power supply in the combination mode (makes the power supply circuit 14 resonate with the power receiving circuit 31 of the relay apparatus 30 at the frequency f1, and makes the power supply circuit 14 resonate with the power receiving circuit 21 of the power receiving apparatus 20 at the frequency f1) (S853).

When the instruction is received, the relay apparatus 30 starts the relay of the power received from the power supply apparatus 10 (makes the power receiving circuit 31 resonate with the power supply circuit 14 of the power supply apparatus 10 at the frequency f1, makes the power transmission circuit 32 resonate with the power receiving circuit 21 of the power receiving apparatus 20 at the frequency f1, and transmits the power of the frequency f1 received from the power supply apparatus 10 as the power of the frequency f1) (S855).

The power receiving apparatus 20 starts the reception of the supply power (the reception of the power of the frequency f1) (S857).

Thereafter, the power receiving apparatus 20 continues the power reception until a moment to end the power reception comes (S858: NO).

When the moment to end the power reception comes (S858: YES), the power receiving apparatus 20 notifies the power supply apparatus 10 of that effect (S859). When the notice is received (S860: YES), the power supply apparatus 10 stops the power supply (S861).

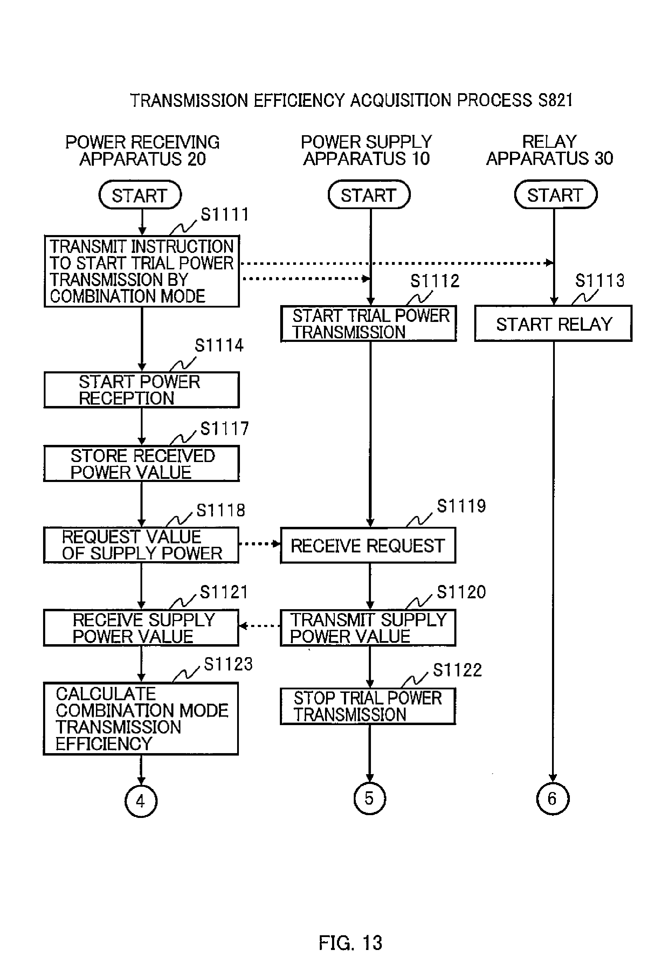

Figure 13 to Figure 15 are flowcharts illustrating the detail of the transmission efficiency acquisition process S821.

As illustrated in Figure 13, first, the power receiving apparatus 20 transmits an instruction to start trial power transmission in the combination mode to the power supply apparatus 10 and the relay apparatus 30 (S1111).

When the instruction is received, the power supply apparatus 10 starts the trial power transmission in the combination mode (makes the power supply circuit 14 resonate with the power receiving circuit 21 of the power receiving apparatus 20 at the frequency f1, and makes the power supply circuit 14 resonate with the power receiving circuit 31 of the relay apparatus 30 at the frequency f1) (S1112).

When the instruction is received, the relay apparatus 30 starts the relay of the power received from the power supply apparatus 10 (makes the power receiving circuit 31 resonate with the power supply circuit 14 of the power supply apparatus 10 at the frequency f1, makes the power transmission circuit 32 resonate with the power receiving circuit 21 of the power receiving apparatus 20 at the frequency f1, and transmits the power of the frequency f1 received from the power supply apparatus 10 as the power of the frequency f1) (S1113).

When the instruction is received, the power receiving apparatus 20 starts the reception of the supply power (the reception of the power of the frequency f1) (S1114).

When the power reception is started, the power receiving apparatus 20 stores a value of the power received by the power receiving apparatus 20 (a received power value) (S1117).

Also, the power receiving apparatus 20 requests a value of the supply power (a value of the supply power transmitted on trial) from the power supply apparatus 10 (S1118). When the request is received (S1119), the power supply apparatus 10 transmits the value of the supply power transmitted on trial (the supply power value) (S1120). Thereafter, the power supply apparatus 10 stops the trial power transmission (S1122).

When the supply power value is received from the power supply apparatus 10 (S1121), the power receiving apparatus 20 obtains the combination mode transmission efficiency on the basis of the received power value stored in S1117 and the supply power value received in S1121 (S1123).

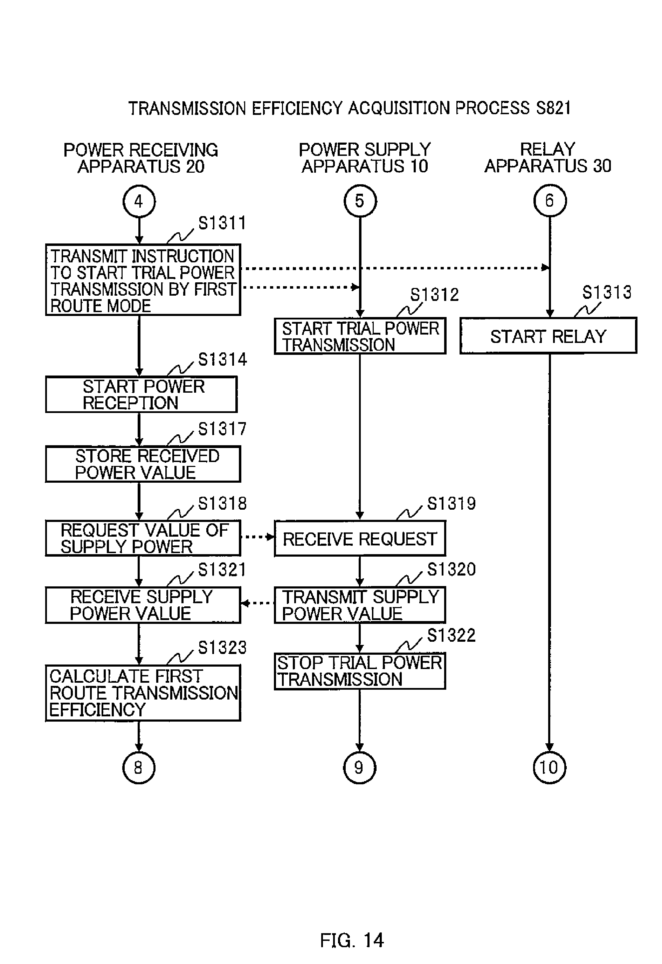

In S1311 in Figure 14, the power receiving apparatus 20 transmits an instruction to start trial power transmission in the first route mode to the power supply apparatus 10 and the relay apparatus 30 (S1311).

When the instruction is received, the power supply apparatus 10 starts the trial power transmission in the first route mode (makes the power supply circuit 14 resonate with the power receiving circuit 31 of the relay apparatus 30 at the frequency f2) (S1312).

When the instruction is received, the relay apparatus 30 starts the relay of the power received from the power supply apparatus 10 (makes the power receiving circuit 31 resonate with the power supply circuit 14 of the power supply apparatus 10 at the frequency f2, makes the power transmission circuit 32 resonate with the power receiving circuit 21 of the power receiving apparatus 20 at the frequency f1, and transmits the power of the frequency f2 received from the power supply apparatus 10 as the power of the frequency f1) (S1313).

When the instruction is transmitted, the power receiving apparatus 20 starts the reception of the supply power (the reception of the power of the frequency f1) (S1314).

When the trial power transmission is started, the power receiving apparatus 20 stores a value of the power received by the power receiving apparatus 20 (a received power value) (S1317).

Also, the power receiving apparatus 20 requests a value of the supply power (a value of the supply power transmitted on trial) from the power supply apparatus 10 (S1318). When the request is received (S1319), the power supply apparatus 10 transmits the value of the supply power transmitted on trial (the supply power value) (S1320). Thereafter, the power supply apparatus 10 stops the trial power transmission (S1322).

When the supply power value is received from the power supply apparatus 10 (S1321), the power receiving apparatus 20 obtains the first route transmission efficiency on the basis of the received power value stored in S1317 and the supply power value received in S1321 (S1323).

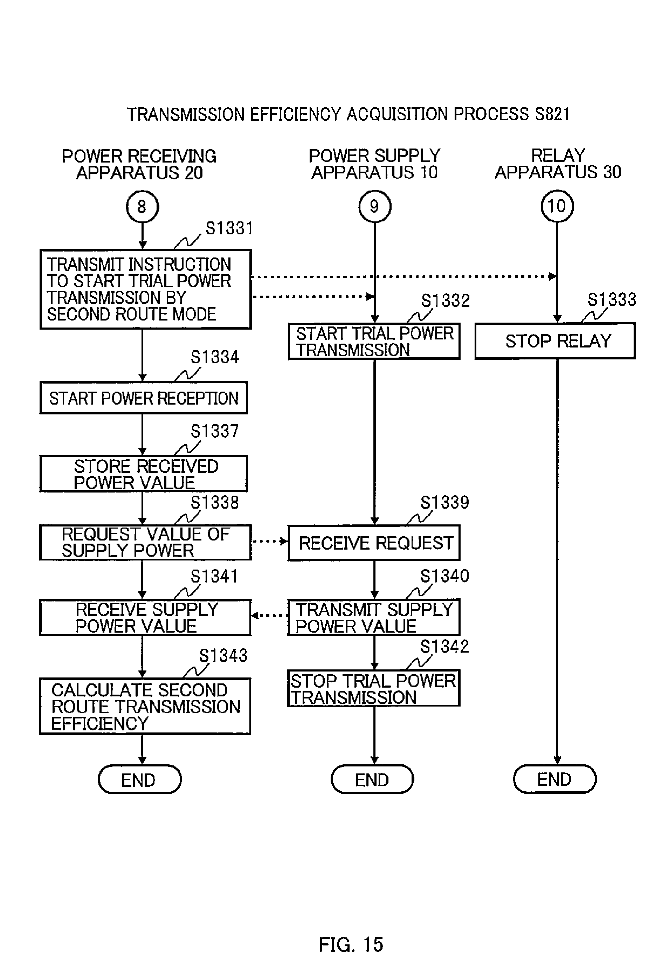

Subsequently, the power receiving apparatus 20 transmits an instruction to start trial power transmission in the second route mode to the power supply apparatus 10 and the relay apparatus 30 (S1331 in Figure 15).

When the instruction is received, the power supply apparatus 10 starts the trial power transmission in the second route mode (makes the power supply circuit 14 resonate with the power receiving circuit 21 of the power receiving apparatus 20 at the frequency f1) (S1332).

When the instruction is received, the relay apparatus 30 does not relay the power from the power supply apparatus 10 (does not allow the power receiving circuit 31 to resonate with the power supply circuit 14 of the power supply apparatus 10) (S1333).

The power receiving apparatus 20 starts the reception of the supply power (the reception of the power of the frequency f1) (S1334).

When the trial power transmission is started, the power receiving apparatus 20 stores a value of the power received by the power receiving apparatus 20 (a received power value) (S1337).

Also, the power receiving apparatus 20 requests a value of the supply power (a value of the supply power transmitted on trial) from the power supply apparatus 10 (S1338). When the request is received (S1339), the power supply apparatus 10 transmits the value of the supply power transmitted on trial (the supply power value) (S1340). Thereafter, the power supply apparatus 10 stops the trial power transmission (S1342).

When the supply power value is received from the power supply apparatus 10 (S1341), the power receiving apparatus 20 obtains the second route transmission efficiency on the basis of the received power value stored in S1337 and the supply power value received in S1341 (S1343).

In this way, in the first process example, the power receiving apparatus 20 mainly performs comparison of the transmission efficiency and switching control of the power supply mode so that configurations of the power supply apparatus 10 and the relay apparatus 30 can be simplified.

### <Second process example>

While the power receiving apparatus 20 performs the comparison of the transmission efficiency and the switching control of the power supply mode in the first process example, the power supply apparatus 10 mainly performs them in the second process example.

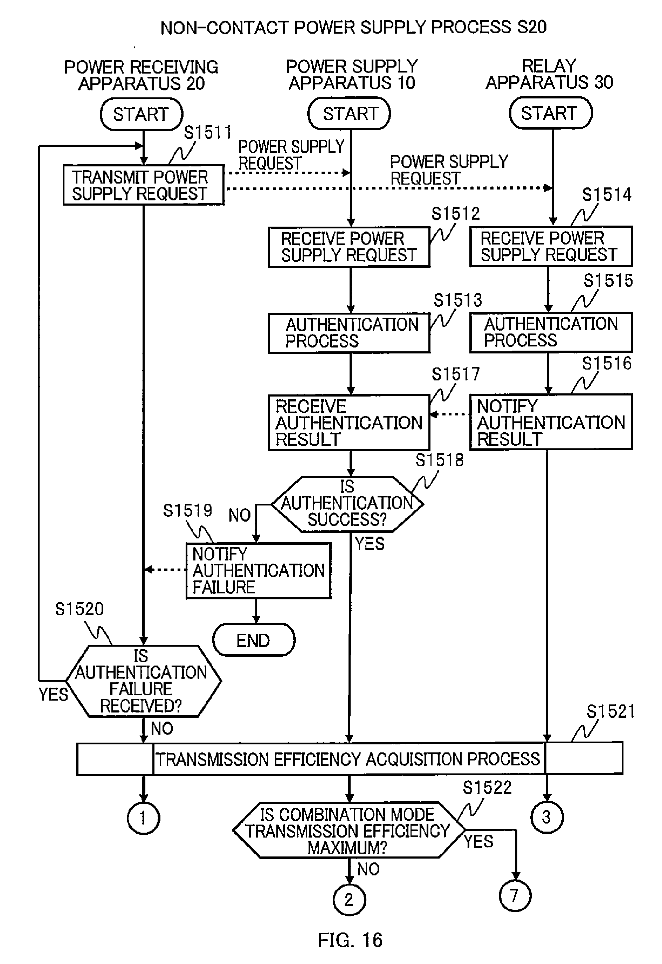

Figure 16 to Figure 21 are flowcharts illustrating a non-contact power supply process S20 to be described as the second process example. Hereinafter, a description will be given with reference to these figures.

Since processes S1511 to S1520 in Figure 16 are similar to the processes S811 to S820 in Figure 10, the description will be omitted.

In S1521, the power supply apparatus 10 acquires the combination mode transmission efficiency, the first route transmission efficiency, and the second route transmission efficiency. Detail of the process (called a transmission efficiency acquisition process S1521, hereinafter) will be described later.

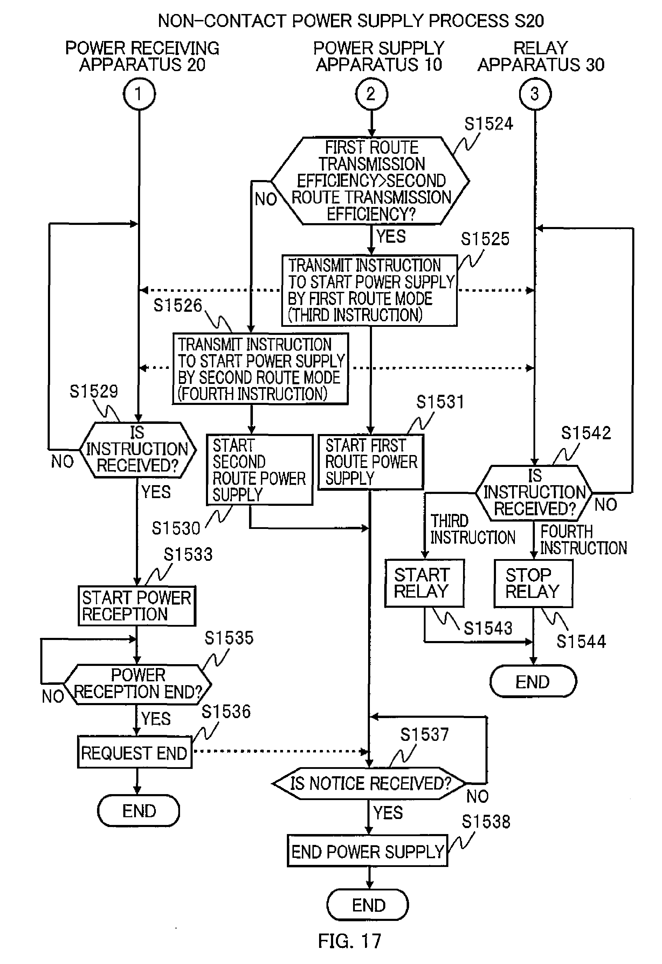

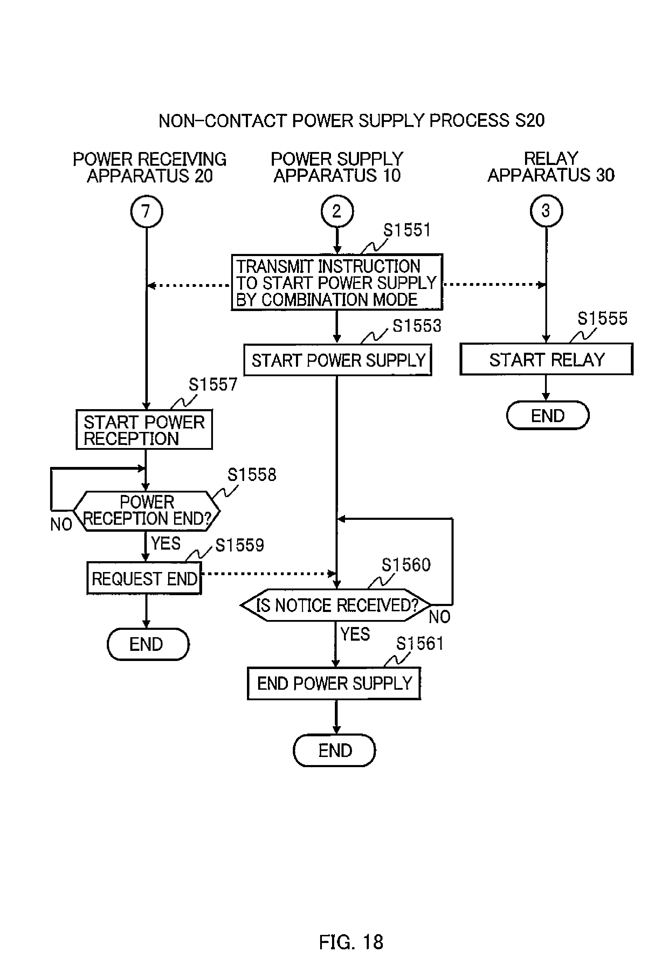

The power supply apparatus 10 compares the combination mode transmission efficiency, the first route transmission efficiency, and the second route transmission efficiency, that are acquired in the transmission efficiency acquisition process S1521, and determines whether or not the combination mode transmission efficiency is the maximum (S1522). In the case that the combination mode transmission efficiency is the maximum (S1522: YES), the process advances to S1551 in Figure 18 so as to supply the power in the combination mode, and on the other hand, in the case that the combination mode transmission efficiency is not the maximum (S1522: NO), the process advances to S1524 in Figure 17.

In S1524, the power supply apparatus 10 compares the first route transmission efficiency and the second route transmission efficiency that are acquired in S1521. As a result of comparison, in the case that the first route transmission efficiency is higher than the second route transmission efficiency (S1524: YES), the power supply apparatus 10 transmits an instruction to start the power supply in the first route mode (called a third instruction, hereinafter) to the power receiving apparatus 20 and the relay apparatus 30 (S1525), and starts the power supply in the first route mode (makes the power supply circuit 14 resonate with the power receiving circuit 31 of the relay apparatus 30 at the frequency f2) (S1531).

On the other hand, in the case that the first route transmission efficiency is equal to or lower than the second route transmission efficiency (S1524: NO), the power supply apparatus 10 transmits an instruction to start the power supply in the second route mode (called a fourth instruction, hereinafter) to the power receiving apparatus 20 and the relay apparatus 30 (S1526), and starts the power supply in the second route mode (makes the power supply circuit 14 resonate with the power receiving circuit 21 of the power receiving apparatus 20 at the frequency f1, and does not allow the power supply circuit 14 to resonate with the power receiving circuit 31 of the relay apparatus 30) (S1530).

When the third instruction is received (S1542: third instruction), the relay apparatus 30 starts the relay of the power received from the power supply apparatus 10 (makes the power receiving circuit 31 resonate with the power supply circuit 14 of the power supply apparatus 10 at the frequency f2, makes the power transmission circuit 32 resonate with the power receiving circuit 21 of the power receiving apparatus 20 at the frequency f1, and transmits the power of the frequency f2 received from the power supply apparatus 10 as the power of the frequency f1) (S1543).

On the other hand, when the fourth instruction is received (S1542: fourth instruction), the relay apparatus 30 does not relay the power from the power supply apparatus 10 (does not allow the power receiving circuit 31 to resonate with the power supply circuit 14 of the power supply apparatus 10) (S1544).

When the instruction (the third instruction, or the fourth instruction) is received (S1529: YES), the power receiving apparatus 20 starts the reception of the supply power (the reception of the power of the frequency f1) (S1533).

Thereafter, the power receiving apparatus 20 continues the power reception until a moment to end the power reception comes (S1535: NO).

When the moment to end the power reception comes (S1535: YES), the power receiving apparatus 20 notifies the power supply apparatus 10 of that effect (S1536). When the notice is received (S1537: YES), the power supply apparatus 10 stops the power supply (S1538).

In Figure 18, the power supply apparatus 10 transmits an instruction to start the power supply in the combination mode to the relay apparatus 30 (S1551 in Figure 18), and starts the power supply in the combination mode (makes the power supply circuit 14 resonate with the power receiving circuit 31 of the relay apparatus 30 at the frequency f1, and makes the power supply circuit 14 resonate with the power receiving circuit 21 of the power receiving apparatus 20 at the frequency f1) (S1553).

When the instruction is received, the relay apparatus 30 starts the relay of the power received from the power supply apparatus 10 (makes the power receiving circuit 31 resonate with the power supply circuit 14 of the power supply apparatus 10 at the frequency f1, makes the power transmission circuit 32 resonate with the power receiving circuit 21 of the power receiving apparatus 20 at the frequency f1, and transmits the power of the frequency f1 received from the power supply apparatus 10 as the power of the frequency f1) (S1555).

The power receiving apparatus 20 starts the reception of the supply power (the reception of the power of the frequency f1) (S1557). Thereafter, the power receiving apparatus 20 continues the power reception until a moment to end the power reception comes (S1558: NO).

When the moment to end the power reception comes (S1558: YES), the power receiving apparatus 20 notifies the power supply apparatus 10 of that effect (S1559). When the notice is received (S1560: YES), the power supply apparatus 10 stops the power supply (S1561).

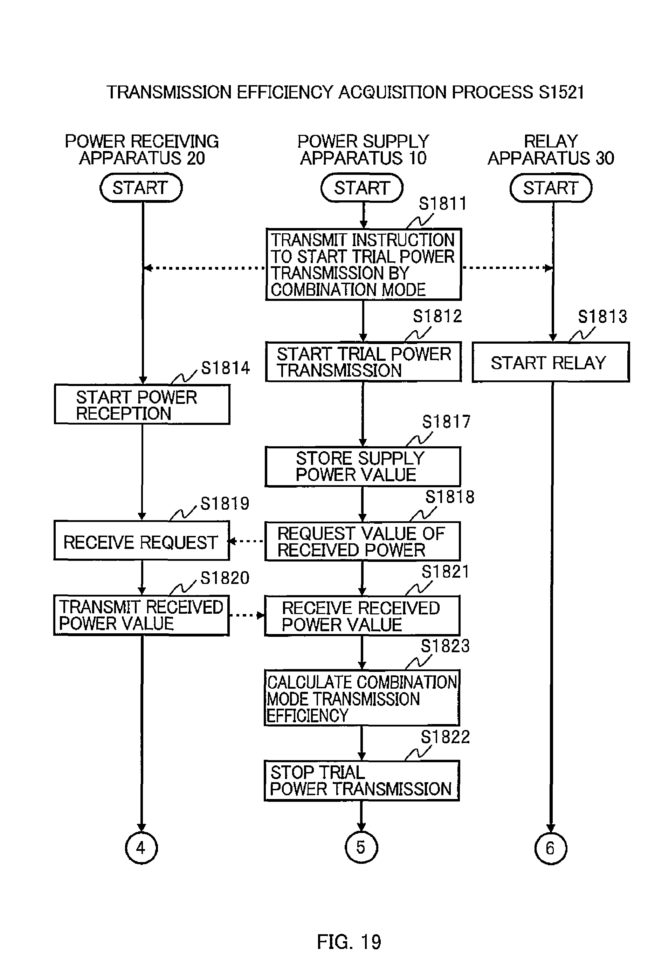

Figure 19 to Figure 21 are flowcharts illustrating the detail of the transmission efficiency acquisition process S1521.

As illustrated in Figure 19, first, the power supply apparatus 10 transmits an instruction to start the trial power transmission in the combination mode to the relay apparatus 30 (S1811), and starts the trial power transmission in the combination mode (makes the power supply circuit 14 resonate with the power receiving circuit 31 of the relay apparatus 30 at the frequency f1, and makes the power supply circuit 14 resonate with the power receiving circuit 21 of the power receiving apparatus 20 at the frequency f1) (S1812).

When the instruction is received, the relay apparatus 30 starts the relay of the power received from the power supply apparatus 10 (makes the power receiving circuit 31 resonate with the power supply circuit 14 of the power supply apparatus 10 at the frequency f1, makes the power transmission circuit 32 resonate with the power receiving circuit 21 of the power receiving apparatus 20 at the frequency f1, and transmits the power of the frequency f1 received from the power supply apparatus 10 as the power of the frequency f1) (S1813).

When the instruction is received, the power receiving apparatus 20 starts the reception of the supply power (the reception of the power of the frequency f1) (S1814).

When the trial power transmission is started, the power supply apparatus 10 stores a value of the power supplied by the power supply apparatus 10 (a supply power value) (S1817).

Also, the power supply apparatus 10 requests a value of the received power (a value of the power that is being received) from the power receiving apparatus 20 (S1818). When the request is received (S1819), the power receiving apparatus 20 transmits the value of the received power (the received power value) (S1820).

When the received power value is received from the power receiving apparatus 20 (S1821), the power supply apparatus 10 obtains the combination mode transmission efficiency on the basis of the supply power value stored in S1817 and the received power value received in S1821 (S1823). Thereafter, the power supply apparatus 10 stops the trial power transmission (S1822).

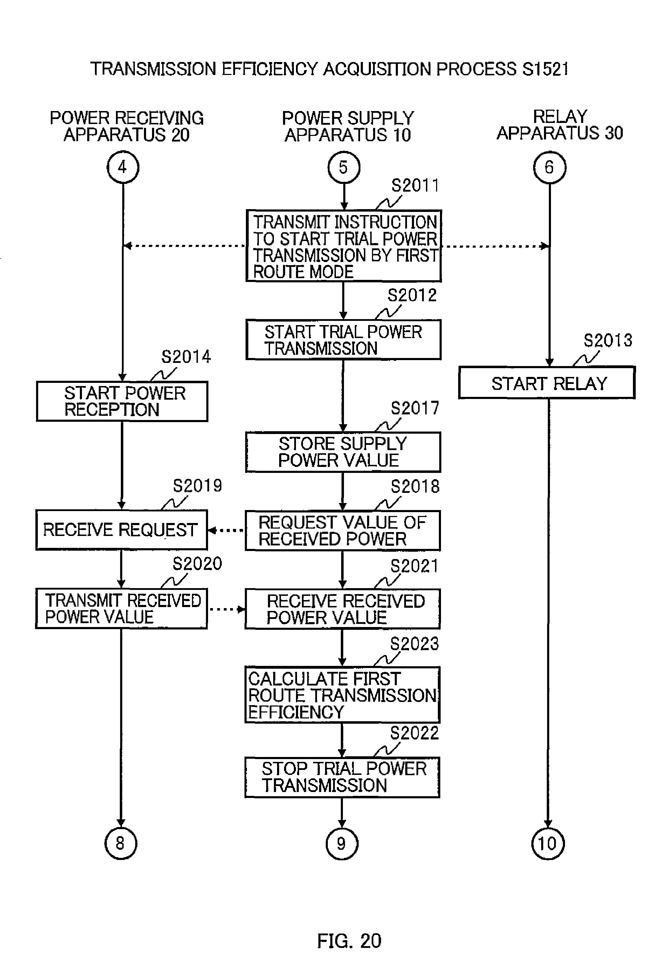

As illustrated in Figure 20, the power supply apparatus 10 transmits an instruction to start the trial power transmission in the first route mode to the power receiving apparatus 20 and the relay apparatus 30 (S2011), and starts the trial power transmission in the first route mode (makes the power supply circuit 14 resonate with the power receiving circuit 31 of the relay apparatus 30 at the frequency f2) (S2012).

When the instruction is received, the relay apparatus 30 starts the relay of the power received from the power supply apparatus 10 (makes the power receiving circuit 31 resonate with the power supply circuit 14 of the power supply apparatus 10 at the frequency f2, makes the power transmission circuit 32 resonate with the power receiving circuit 21 of the power receiving apparatus 20 at the frequency f1, and transmits the power of the frequency f2 received from the power supply apparatus 10 as the power of the frequency f1) (S2013).

When the instruction is received, the power receiving apparatus 20 starts the reception of the supply power (the reception of the power of the frequency f1) (S2014).

When the trial power transmission is started, the power supply apparatus 10 stores a value of the power supplied by the power supply apparatus 10 (a supply power value) (S2017).

Next, the power supply apparatus 10 requests a value of the received power (a value of the power being received) from the power receiving apparatus 20 (S2018). When the request is received (S2019), the power receiving apparatus 20 transmits the value of the received power (the received power value) (S2020).

When the received power value is received from the power receiving apparatus 20 (S2021), the power supply apparatus 10 obtains the first route transmission efficiency on the basis of the supply power value stored in S2017 and the received power value received in S2021 (S2023). Thereafter, the power supply apparatus 10 stops the trial power transmission (S2022).

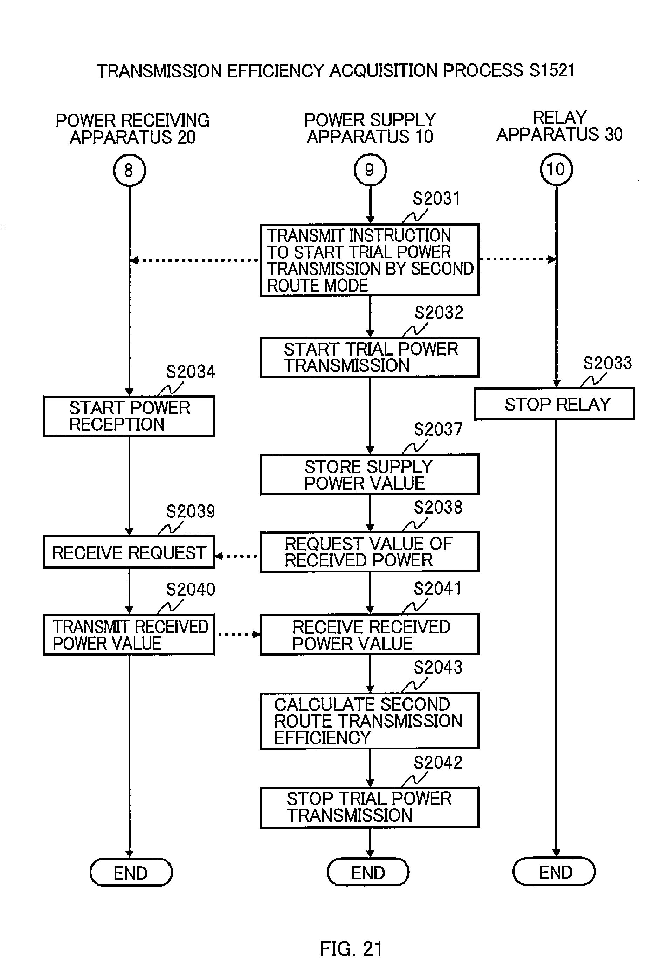

Subsequently, the power supply apparatus 10 transmits an instruction to start the trial power transmission in the second route mode to the power receiving apparatus 20 and the relay apparatus 30 (S2031 in Figure 21), and starts the trial power transmission in the second route mode (makes the power supply circuit 14 resonate with the power receiving circuit 21 of the power receiving apparatus 20 at the frequency f1, and does not allow the power supply circuit 14 to resonate with the power receiving circuit 31 of the relay apparatus 30) (S2032).

When the instruction is received, the relay apparatus 30 does not relay the power from the power supply apparatus 10 (does not allow the power receiving circuit 31 to resonate with the power supply circuit 14 of the power supply apparatus 10) (S2033).

When the instruction is received, the power receiving apparatus 20 starts the reception of the supply power (the reception of the power of the frequency f1) (S2034).

When the trial power transmission is started, the power supply apparatus 10 stores a value of the power supplied by the power supply apparatus 10 (a supply power value) (S2037).

Next, the power supply apparatus 10 requests a value of the received power (a value of the power being received) from the power receiving apparatus 20 (S2038). When the request is received (S2039), the power receiving apparatus 20 transmits the value of the received power (the received power value) (S2040).

When the received power value is received from the power receiving apparatus 20 (S2041), the power supply apparatus 10 obtains the second route transmission efficiency on the basis of the supply power value stored in S2037 and the received power value received in S2041 (S2043). Thereafter, the power supply apparatus 10 stops the trial power transmission (S2042).

In this way, in the second process example, the power supply apparatus 10 mainly performs the comparison of the transmission efficiency and the switching control of the power supply mode so that configurations of the power receiving apparatus 20 and the relay apparatus 30 can be simplified.

As described above, according to the non-contact power supply system 1 of the first embodiment, since the mode of the maximum transmission efficiency is selected among the combination mode, the first route mode, and the second route mode and the power is supplied from the power supply apparatus 10 to the power receiving apparatus 20, the non-contact power supply can be efficiently performed in the case of providing the relay apparatus 30 and performing the non-contact power supply from the power supply apparatus 10 to the power receiving apparatus 20. Therefore, the non-contact power supply can be efficiently performed even in the case that the transmission efficiency is rather lowered by providing the relay apparatus 30 due to influence of interference of the supply power, multipath, reflected waves, or the like.

Also, in the non-contact power supply system 1 of the first embodiment, since the frequency of the power received by the power receiving apparatus 20 does not change (the power is received at the frequency f1 at all times), the need of providing a mechanism of changing the frequency in the power receiving circuit 21 of the power receiving apparatus 20 and the power transmission circuit 32 of the relay apparatus 30 is eliminated, and the power receiving apparatus 20 and the relay apparatus 30 can be simply configured.

Also, by switching the combination mode, the first route mode, and the second route mode by controlling whether or not to make the power supply circuit 14 of the power supply apparatus 10 and the power receiving circuit 31 of the relay apparatus 30, and the power supply circuit 14 of the power supply apparatus 10 and the power receiving circuit 21 of the power receiving apparatus 20 resonate, a mechanism of switching the mode can be easily achieved.

### «Second embodiment»

While the power supply in the first route mode and the power supply in the second route mode are performed by switching the frequency of the power transmitted by the power supply apparatus 10 in the first embodiment, the power supply in the first route mode and the power supply in the second route mode may be switched by switching the frequency of the power received by the power receiving apparatus 20.

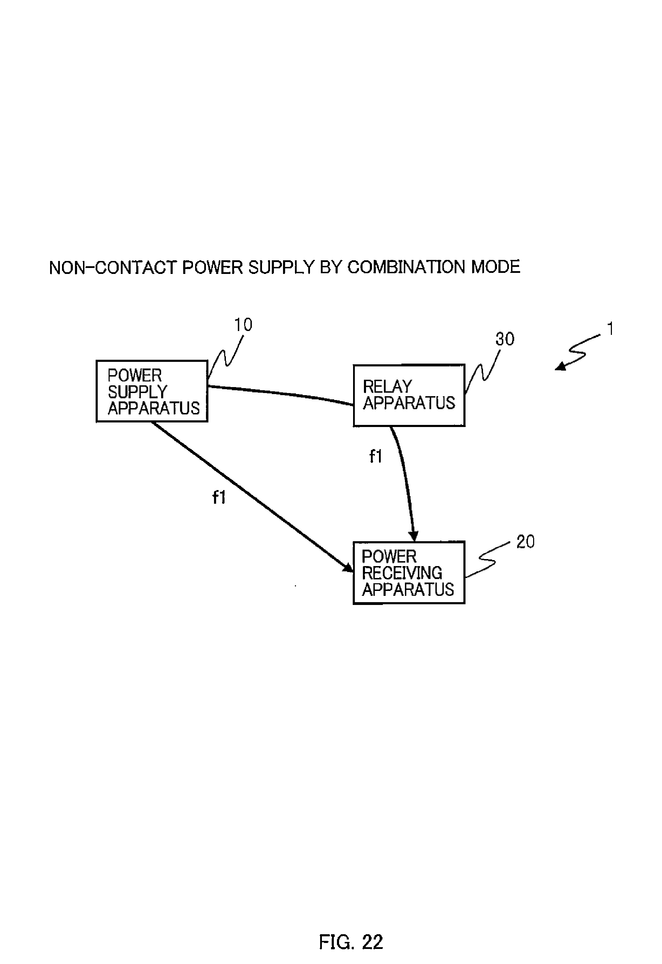

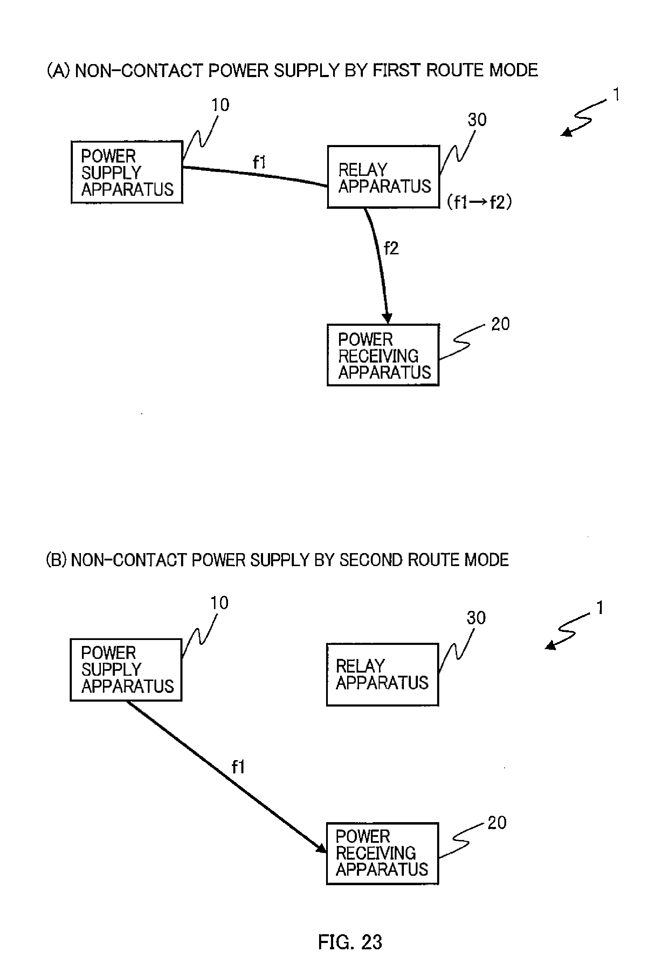

Figure 22 and Figure 23 are diagrams illustrating the power supply in the combination mode, the power supply in the first route mode, and the power supply in the second route mode, that are achieved by the power receiving apparatus 20 switching a received power frequency.

Figure 22 is a diagram illustrating the combination mode. In this mode, the power receiving apparatus 20 receives the power of the frequency f1. That is, as illustrated in the figure, the power is supplied by the frequency f1 from the power supply apparatus 10 to the power receiving apparatus 20, the power is supplied by the frequency f1 from the power supply apparatus 10 to the relay apparatus 30, and the power is supplied by the frequency f1 from the relay apparatus 30 to the power receiving apparatus 20.

Figure 23(A) is a diagram illustrating the power supply mode in the first route mode. In this mode, the power receiving apparatus 20 receives the power of the frequency f2. That is, as illustrated in the figure, the power is supplied by the frequency f1 from the power supply apparatus 10 to the relay apparatus 30, the power is supplied by the frequency f2 from the relay apparatus 30 to the power receiving apparatus 20, and the relay apparatus 30 converts the power of the frequency f1 transmitted from the power supply apparatus 10 to the power of the frequency f2 and transmits the power to the power receiving apparatus 20.

Figure 23(B) is a diagram illustrating the power supply mode by the second route mode. In this mode, the power receiving apparatus 20 receives the power of the frequency f1. That is, as illustrated in the figure, the power is supplied by the frequency f1 from the power supply apparatus 10 to the power receiving apparatus 20, and (the resonant circuit of) the power supply circuit 14 of the power supply apparatus 10 and (the resonant circuit of) the power receiving circuit 31 of the relay apparatus 30 are not allowed to resonate.

In the following description, it is assumed that whether or not to make the power supply circuit and the power receiving circuit resonate is carried out by changing (adjusting) the capacitance of the capacitive element or the inductance of the inductive element configuring the power supply circuit or the power receiving circuit.

### <First process example>

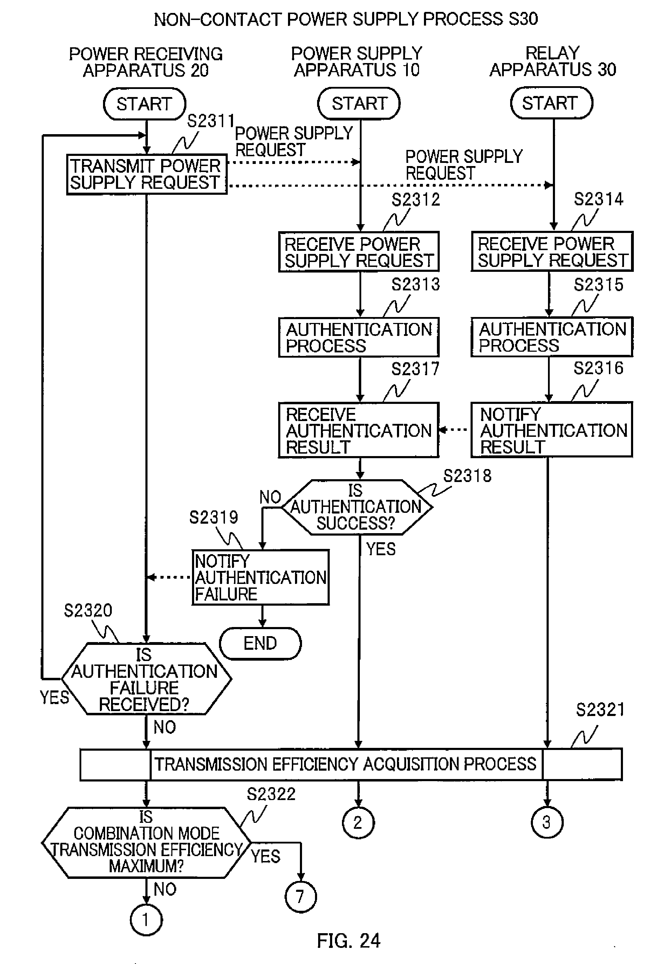

Figure 24 to Figure 29 are flowcharts illustrating a non-contact power supply process S30 to be described as the first process example. Hereinafter, a description will be given with reference to these figures.

Figure 24 to Figure 26 are flowcharts illustrating the entire non-contact power supply process S30 in the first process example.

Since processes S2311 to S2320 in Figure 24 are similar to the processes S811 to S820 in Figure 10, the description will be omitted.

In S2321, the power receiving apparatus 20 acquires the combination mode transmission efficiency, the first route transmission efficiency, and the second route transmission efficiency. Detail of the process (called a transmission efficiency acquisition process S2321, hereinafter) will be described later.

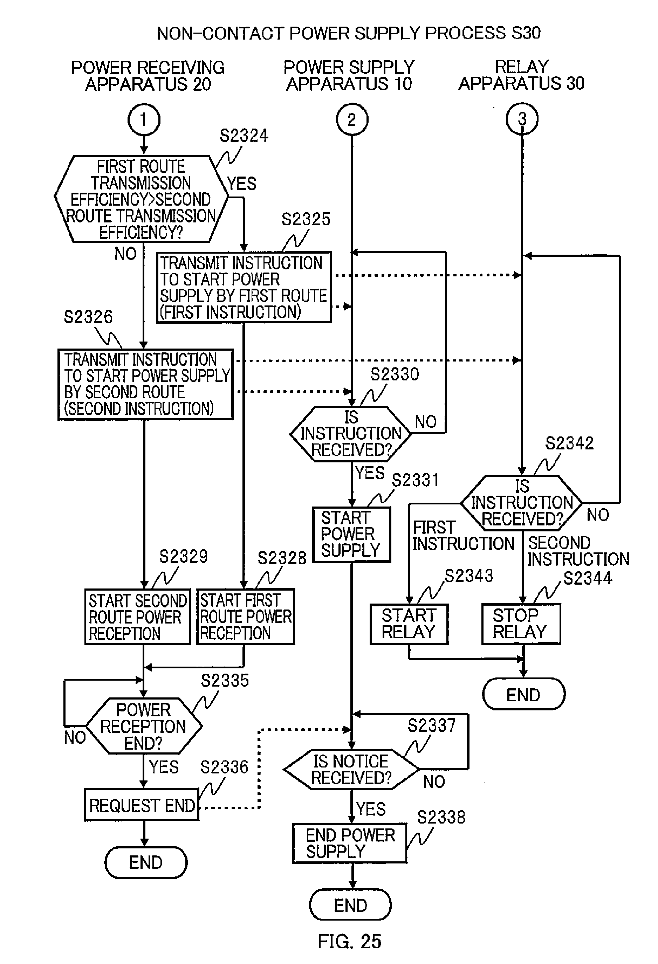

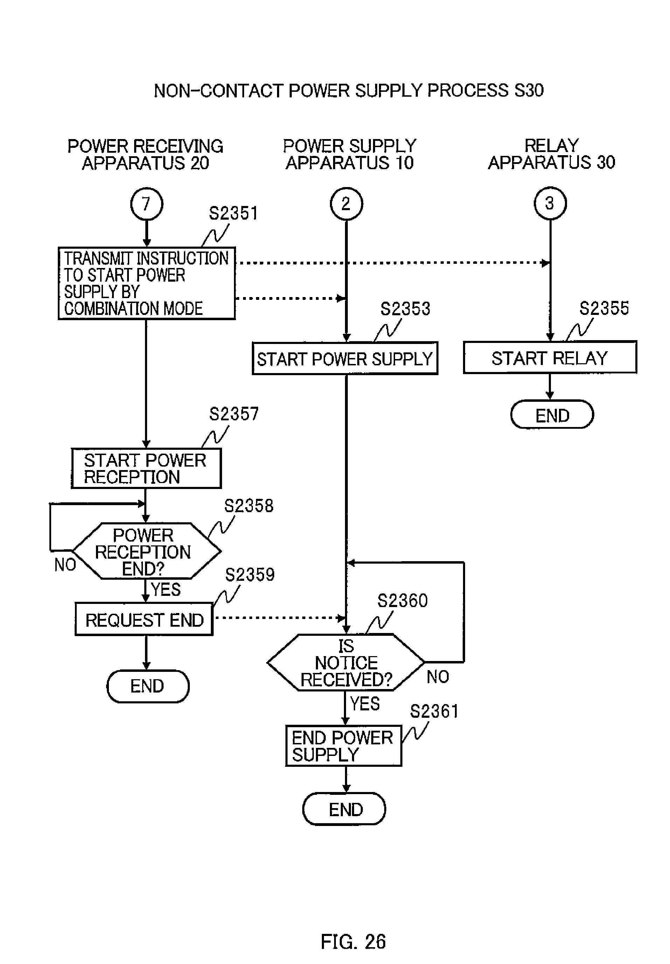

The power receiving apparatus 20 compares the combination mode transmission efficiency, the first route transmission efficiency, and the second route transmission efficiency, that are acquired in the transmission efficiency acquisition process S2321, and determines whether or not the combination mode transmission efficiency is the maximum (S2322). In the case that the combination mode transmission efficiency is the maximum (S2322: YES), the process advances to S2351 in Figure 26 so as to supply the power in the combination mode, and on the other hand, in the case that the combination mode transmission efficiency is not the maximum (S2322: NO), the process advances to S2324 in Figure 25.

In S2324, the power receiving apparatus 20 compares the first route transmission efficiency and the second route transmission efficiency that are acquired in S2321. As a result of comparison, in the case that the first route transmission efficiency is higher than the second route transmission efficiency (S2324: YES), the power receiving apparatus 20 transmits the instruction to start the power supply in the first route mode (called the first instruction, hereinafter) to the power supply apparatus 10 and the relay apparatus 30 (S2325). On the other hand, in the case that the first route transmission efficiency is equal to or lower than the second route transmission efficiency (S2324: NO), the power receiving apparatus 20 transmits the instruction to start the power supply in the second route mode (called the second instruction, hereinafter) to the power supply apparatus 10 and the relay apparatus 30 (S2326).

When the instruction (the first instruction, or the second instruction) is received (S2330: YES), the power supply apparatus 10 starts the power supply (starts the transmission of the power of the frequency f1) (S2331).

When the first instruction is received (S2342: first instruction), the relay apparatus 30 starts the relay of the power received from the power supply apparatus 10 (makes the power receiving circuit 31 resonate with the power supply circuit 14 of the power supply apparatus 10 at the frequency f1, makes the power transmission circuit 32 resonate with the power receiving circuit 21 of the power receiving apparatus 20 at the frequency f2, and transmits the power of the frequency f1 received from the power supply apparatus 10 as the power of the frequency f2) (S2343).

On the other hand, when the second instruction is received (S2342: second instruction), the relay apparatus 30 does not relay the power from the power supply apparatus 10 (does not allow the power receiving circuit 31 to resonate with the power supply circuit 14 of the power supply apparatus 10) (S2344).

When the first instruction is received, the power receiving apparatus 20 starts power reception in the first route mode (makes the power receiving circuit 21 resonate with the power transmission circuit 32 of the relay apparatus 30 at the frequency f2)(S2328).

On the other hand, when the second instruction is received, the power receiving apparatus 20 starts the power reception in the second route mode (makes the power receiving circuit 21 resonate with the power supply circuit 14 of the power supply apparatus 10 at the frequency f1) (S2329).

Thereafter, the power receiving apparatus 20 continues the power reception until a moment to end the power reception comes (S2335: NO).

When the moment to end the power reception comes (S2335: YES), the power receiving apparatus 20 notifies the power supply apparatus 10 of that effect (S2336). When the notice is received (S2337: YES), the power supply apparatus 10 stops the power supply (S2338).

In S2351 in Figure 26, the power receiving apparatus 20 transmits an instruction to start the power supply in the combination mode to the power supply apparatus 10 and the relay apparatus 30.

When the instruction is received, the power supply apparatus 10 starts the power supply (starts the transmission of the power of the frequency f1) (S2353).

When the instruction is received, the relay apparatus 30 starts the relay of the power received from the power supply apparatus 10 (makes the power receiving circuit 31 resonate with the power supply circuit 14 of the power supply apparatus 10 at the frequency f1, makes the power transmission circuit 32 resonate with the power receiving circuit 21 of the power receiving apparatus 20 at the frequency f1, and transmits the power of the frequency f1 received from the power supply apparatus 10 as the power of the frequency f1) (S2355).

The power receiving apparatus 20 starts the reception of the supply power transmitted from the power supply apparatus 10 (makes the power receiving circuit 21 resonate with the power transmission circuit 32 of the relay apparatus 30 at the frequency f1, and makes the power receiving circuit 21 resonate with the power supply circuit 14 of the power supply apparatus 10 at the frequency f1) (S2357). Thereafter, the power receiving apparatus 20 continues the power reception until a moment to end the power reception comes (S2358: NO).

When the moment to end the power reception comes (S2358: YES), the power receiving apparatus 20 notifies the power supply apparatus 10 of that effect (S2359). When the notice is received (S2360: YES), the power supply apparatus 10 stops the power supply (S2361).

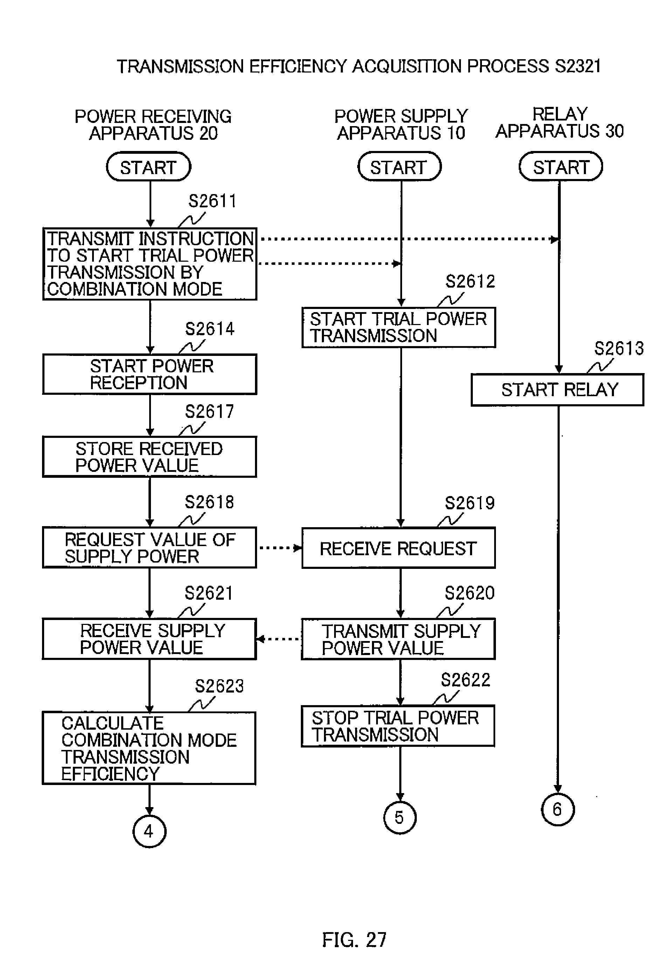

Figure 27 to Figure 29 are flowcharts illustrating the detail of the transmission efficiency acquisition process S2321.

As illustrated in Figure 27, first, the power receiving apparatus 20 transmits an instruction to start the trial power transmission in the combination mode to the power supply apparatus 10 and the relay apparatus 30 (S2611).

When the instruction is received, the power supply apparatus 10 starts the trial power transmission in the combination mode (starts the trial power transmission of the power of the frequency f1) (S2612).

When the instruction is received, the relay apparatus 30 starts the relay of the power received from the power supply apparatus 10 (makes the power receiving circuit 31 resonate with the power supply circuit 14 of the power supply apparatus 10 at the frequency f1, makes the power transmission circuit 32 resonate with the power receiving circuit 21 of the power receiving apparatus 20 at the frequency f1, and transmits the power of the frequency f1 received from the power supply apparatus 10 as the power of the frequency f1) (S2613).

The power receiving apparatus 20 starts the power reception in the combination mode (makes the power receiving circuit 21 resonate with the power transmission circuit 32 of the relay apparatus 30 at the frequency f1, and makes the power receiving circuit 21 resonate with the power supply circuit 14 of the power supply apparatus 10 at the frequency f1) (S2614).

When the trial power transmission is started, the power receiving apparatus 20 stores a value of the power received by the power receiving apparatus 20 (a received power value) (S2617).

Also, the power receiving apparatus 20 requests a value of the supply power (a value of the supply power transmitted on trial) from the power supply apparatus 10 (S2618). When the request is received (S2619), the power supply apparatus 10 transmits the value of the supply power transmitted on trial (the supply power value) (S2620). Thereafter, the power supply apparatus 10 stops the trial power transmission (S2622).

When the supply power value is received from the power supply apparatus 10 (S2621), the power receiving apparatus 20 obtains the combination mode transmission efficiency on the basis of the received power value stored in S2617 and the supply power value received in S2621 (S2623).

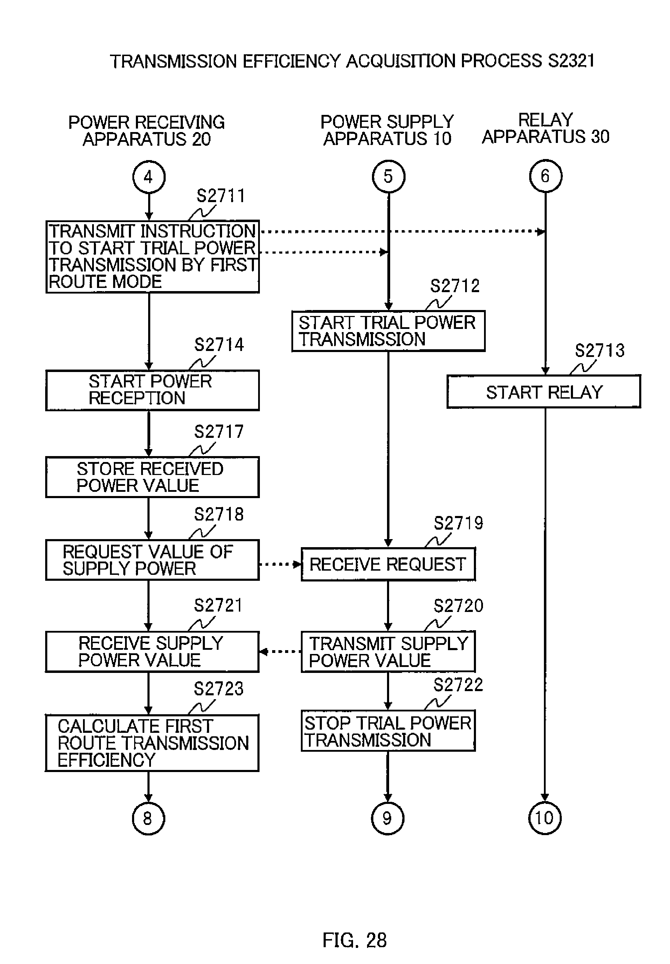

In S2711 in Figure 28, the power receiving apparatus 20 transmits an instruction to start the trial power transmission in the first route mode to the power supply apparatus 10 and the relay apparatus 30.

When the instruction is received, the power supply apparatus 10 starts the trial power transmission in the first route mode (starts the trial power transmission of the power of the frequency f1) (S2712).

When the instruction is received, the relay apparatus 30 starts the relay of the power received from the power supply apparatus 10 (makes the power receiving circuit 31 resonate with the power supply circuit 14 of the power supply apparatus 10 at the frequency f1, makes the power transmission circuit 32 resonate with the power receiving circuit 21 of the power receiving apparatus 20 at the frequency f2, and transmits the power of the frequency f1 received from the power supply apparatus 10 as the power of the frequency f2) (S2713).

The power receiving apparatus 20 starts the power reception in the first route mode (makes the power receiving circuit 21 resonate with the power transmission circuit 32 of the relay apparatus 30 at the frequency f2) (S2714).

When the trial power transmission is started, the power receiving apparatus 20 stores a value of the power received by the power receiving apparatus 20 (a received power value) (S2717).

Also, the power receiving apparatus 20 requests a value of the supply power (a value of the supply power transmitted on trial) from the power supply apparatus 10 (S2718). When the request is received (S2719), the power supply apparatus 10 transmits the value of the supply power transmitted on trial (the supply power value) (S2720). Thereafter, the power supply apparatus 10 stops the trial power transmission (S2722).

When the supply power value is received from the power supply apparatus 10 (S2721), the power receiving apparatus 20 obtains the first route transmission efficiency on the basis of the received power value stored in S2717 and the supply power value received in S2721 (S2723).

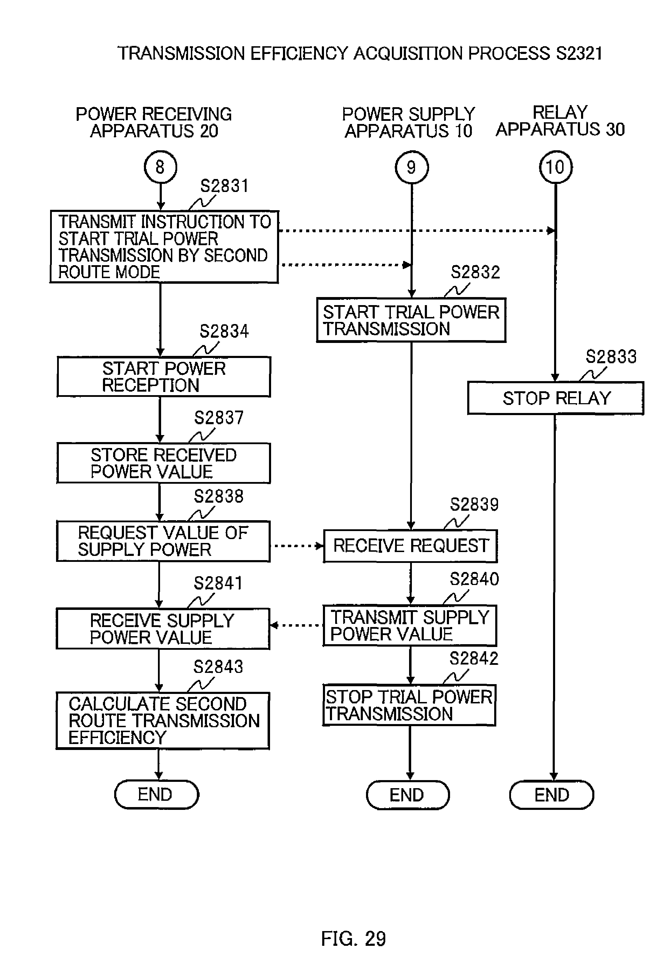

Subsequently, the power receiving apparatus 20 transmits an instruction to start the trial power transmission in the second route mode to the power supply apparatus 10 and the relay apparatus 30 (S2831 in Figure 29).

When the instruction is received, the power supply apparatus 10 starts the trial power transmission in the second route mode (starts the trial power transmission of the power of the frequency f1) (S2832).

When the instruction is received, the relay apparatus 30 does not relay the power from the power supply apparatus 10 (does not allow the power receiving circuit 31 to resonate with the power supply circuit 14 of the power supply apparatus 10) (S2833).

When the instruction is transmitted, the power receiving apparatus 20 starts the power reception in the second route mode (makes the power receiving circuit 21 resonate with the power supply circuit 14 of the power supply apparatus 10 at the frequency f1) (S2834).

When the trial power transmission is started, the power receiving apparatus 20 stores a value of the power received by the power receiving apparatus 20 (a received power value) (S2837).

Also, the power receiving apparatus 20 requests a value of the supply power (a value of the supply power transmitted on trial) from the power supply apparatus 10 (S2838). When the request is received (S2839), the power supply apparatus 10 transmits the value of the supply power transmitted on trial (the supply power value) (S2840). Thereafter, the power supply apparatus 10 stops the trial power transmission (S2842).

When the supply power value is received from the power supply apparatus 10 (S2841), the power receiving apparatus 20 obtains the second route transmission efficiency on the basis of the received power value stored in S2837 and the supply power value received in S2841 (S2843).

In this way, the power receiving apparatus 20 mainly performs the comparison of the transmission efficiency and the switching control of the power supply mode so that the configurations of the power supply apparatus 10 and the relay apparatus 30 can be simplified.

### <Second process example>

While the power receiving apparatus 20 performs the comparison of the transmission efficiency and the switching control of the power supply mode in the first process example, the power supply apparatus 10 mainly performs them in the second process example.

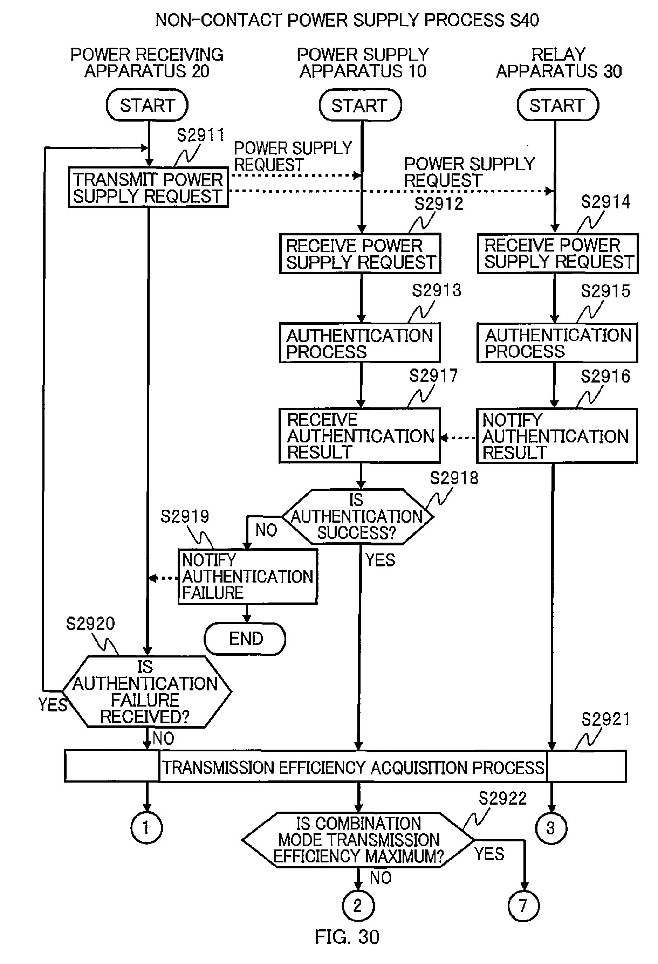

Figure 30 to Figure 35 are flowcharts illustrating a non-contact power supply process S40 to be described as the second process example. Hereinafter, a description will be given with reference to these figures.

Since processes S2911 to S2920 in Figure 30 are similar to the processes S2311 to S2320 in Figure 24, the description will be omitted.

In S2921, the power supply apparatus 10 acquires the combination mode transmission efficiency, the first route transmission efficiency, and the second route transmission efficiency. Detail of the process (called a transmission efficiency acquisition process S2921, hereinafter) will be described later.

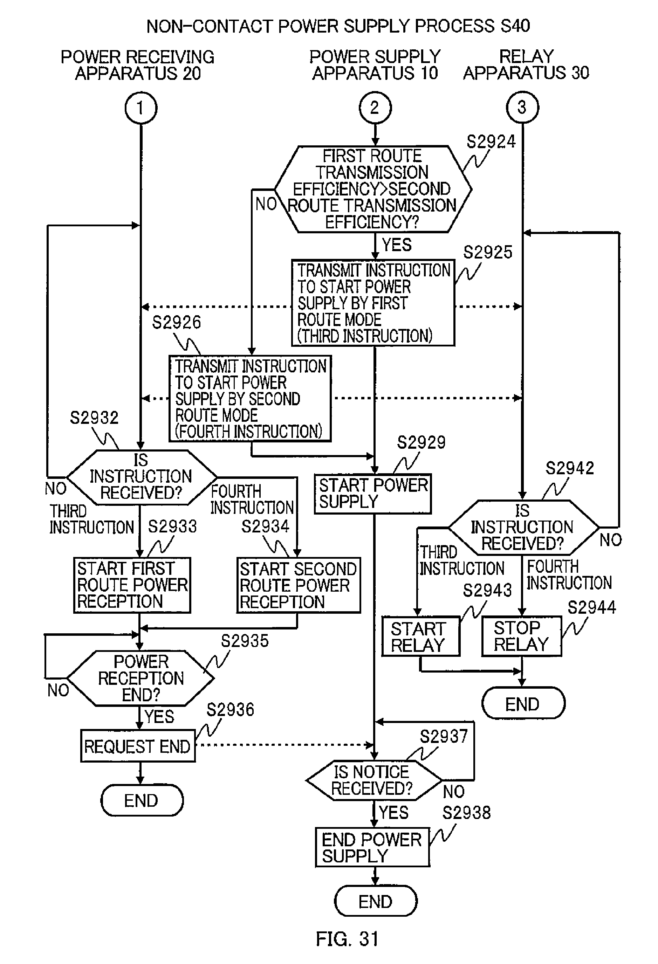

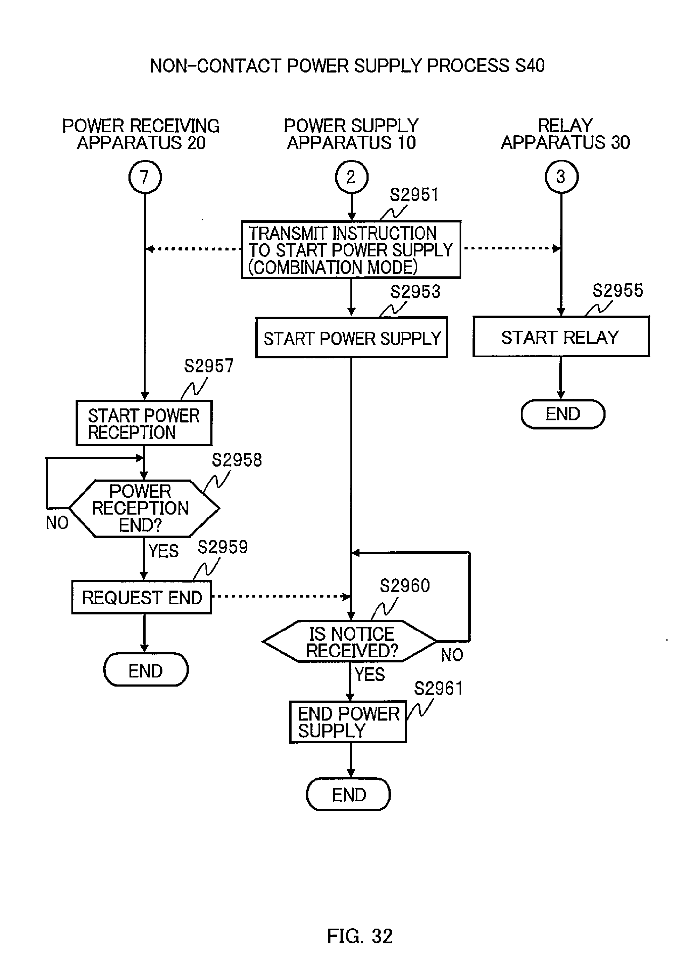

The power supply apparatus 10 compares the combination mode transmission efficiency, the first route transmission efficiency, and the second route transmission efficiency, that are acquired in the transmission efficiency acquisition process S2921, and determines whether or not the combination mode transmission efficiency is the maximum (S2922). In the case that the combination mode transmission efficiency is the maximum (S2922: YES), the process advances to S2951 in Figure 32 so as to supply the power in the combination mode, and on the other hand, in the case that the combination mode transmission efficiency is not the maximum (S2922: NO), the process advances to S2924 in Figure 31.

In S2924 in Figure 31, the power supply apparatus 10 compares the first route transmission efficiency and the second route transmission efficiency that are acquired in S2921. As a result of comparison, in the case that the first route transmission efficiency is higher than the second route transmission efficiency (S2924: YES), the power supply apparatus 10 transmits an instruction to start the power supply in the first route mode (called the third instruction, hereinafter) to the power receiving apparatus 20 and the relay apparatus 30 (S2925), and on the other hand, in the case that the first route transmission efficiency is equal to or lower than the second route transmission efficiency (S2924: NO), the power supply apparatus 10 transmits an instruction to start the power supply in the second route mode (called the fourth instruction, hereinafter) to the power receiving apparatus 20 and the relay apparatus 30 (S2926).

When the instruction (the third instruction, or the fourth instruction) is transmitted, the power supply apparatus 10 starts the power supply (starts the trial power transmission of the power of the frequency f1) (S2929).

When the third instruction is received (S2942: third instruction), the relay apparatus 30 starts the relay of the power received from the power supply apparatus 10 (makes the power receiving circuit 31 resonate with the power supply circuit 14 of the power supply apparatus 10 at the frequency f1, makes the power transmission circuit 32 resonate with the power receiving circuit 21 of the power receiving apparatus 20 at the frequency f2, and transmits the power of the frequency f1 received from the power supply apparatus 10 as the power of the frequency f2) (S2943). On the other hand, when the fourth instruction is received (S2942: fourth instruction), the relay apparatus 30 does not relay the power from the power supply apparatus 10 (does not allow the power receiving circuit 31 to resonate with the power supply circuit 14 of the power supply apparatus 10).

When the third instruction transmitted from the power supply apparatus 10 is received (S2932: third instruction), the power receiving apparatus 20 starts the power reception in the first route mode (makes the power receiving circuit 21 resonate with the power transmission circuit 32 of the relay apparatus 30 at the frequency f2) (S2933). On the other hand, when the fourth instruction transmitted from the power supply apparatus 10 is received (S2932: fourth instruction), the power receiving apparatus 20 starts the power reception in the second route mode (makes the power receiving circuit 21 resonate with the power supply circuit 14 of the power supply apparatus 10 at the frequency f1) (S2934).

Thereafter, the power receiving apparatus 20 continues the power reception until a moment to end the power reception comes (S2935: NO).

When the moment to end the power reception comes (S2935: YES), the power receiving apparatus 20 notifies the power supply apparatus 10 of that effect (S2936). When the notice is received (S2937: YES), the power supply apparatus 10 stops the power supply (S2938).

In Figure 32, the power supply apparatus 10 transmits an instruction to start the power supply in the combination mode to the power receiving apparatus 20 and the relay apparatus 30 (S2951 in Figure 32), and starts the power supply in the combination mode (starts the transmission of the power of the frequency f1) (S2953).

When the instruction is received, the relay apparatus 30 starts the relay of the power received from the power supply apparatus 10 (makes the power receiving circuit 31 resonate with the power supply circuit 14 of the power supply apparatus 10 at the frequency f1, makes the power transmission circuit 32 resonate with the power receiving circuit 21 of the power receiving apparatus 20 at the frequency f1, and transmits the power of the frequency f1 received from the power supply apparatus 10 as the power of the frequency f1) (S2955).

The power receiving apparatus 20 starts the reception of the supply power transmitted from the power supply apparatus 10 (makes the power receiving circuit 21 resonate with the power transmission circuit 32 of the relay apparatus 30 at the frequency f1, and makes the power receiving circuit 21 resonate with the power supply circuit 14 of the power supply apparatus 10 at the frequency f1) (S2957). Thereafter, the power receiving apparatus 20 continues the power reception until a moment to end the power reception comes (S2958: NO).

When the moment to end the power reception comes (S2958: YES), the power receiving apparatus 20 notifies the power supply apparatus 10 of that effect (S2959). When the notice is received (S2960: YES), the power supply apparatus 10 stops the power supply (S2961).

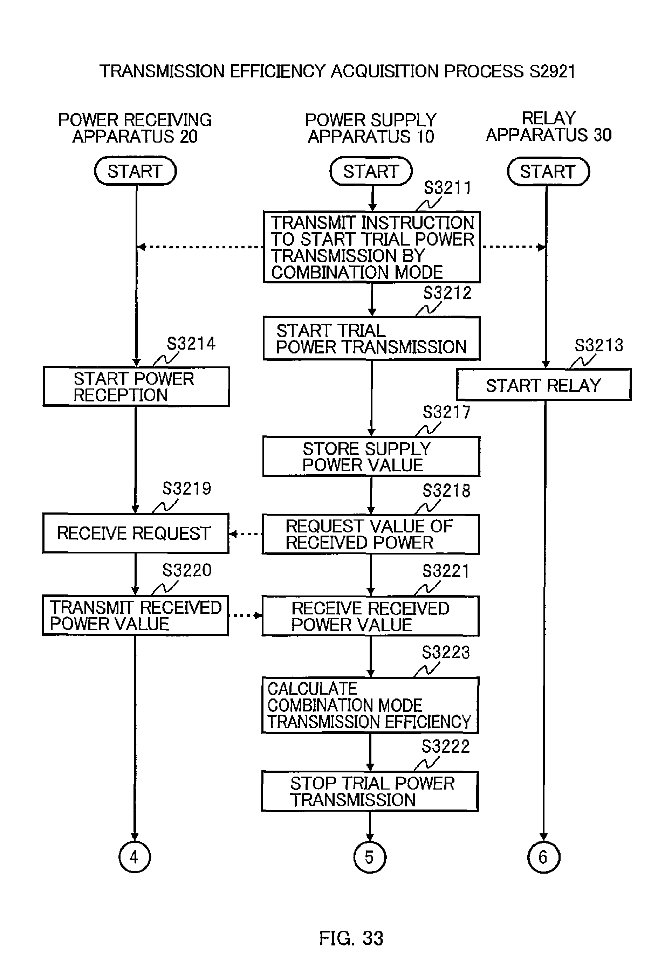

Figure 33 to Figure 35 are flowcharts illustrating the detail of the transmission efficiency acquisition process S2921.

As illustrated in Figure 33, first, the power supply apparatus 10 transmits an instruction to start the trial power transmission in the combination mode to the power receiving apparatus 20 and the relay apparatus 30 (S3211), and starts the trial power transmission in the combination mode (starts the trial power transmission of the power of the frequency f1) (S3212).

When the instruction is received, the relay apparatus 30 starts the relay of the power received from the power supply apparatus 10 (makes the power receiving circuit 31 resonate with the power supply circuit 14 of the power supply apparatus 10 at the frequency f1, makes the power transmission circuit 32 resonate with the power receiving circuit 21 of the power receiving apparatus 20 at the frequency f1, and transmits the power of the frequency f1 received from the power supply apparatus 10 as the power of the frequency f1) (S3213).

When the instruction is received, the power receiving apparatus 20 starts the power reception in the combination mode (makes the power receiving circuit 21 resonate with the power transmission circuit 32 of the relay apparatus 30 at the frequency f1, and makes the power receiving circuit 21 resonate with the power supply circuit 14 of the power supply apparatus 10 at the frequency f1) (S3214).

When the trial power transmission is started, the power supply apparatus 10 stores a value of the power supplied by the power supply apparatus 10 (a supply power value) (S3217).

Also, the power supply apparatus 10 requests a value of the received power (a value of the power that is being received) from the power receiving apparatus 20 (S3218). When the request is received (S3219), the power receiving apparatus 20 transmits the value of the received power (the received power value) (S3220).

When the received power value is received from the power receiving apparatus 20 (S3221), the power supply apparatus 10 obtains the combination mode transmission efficiency on the basis of the supply power value stored in S3217 and the received power value received in S3221 (S3223). Thereafter, the power supply apparatus 10 stops the trial power transmission (S3222).

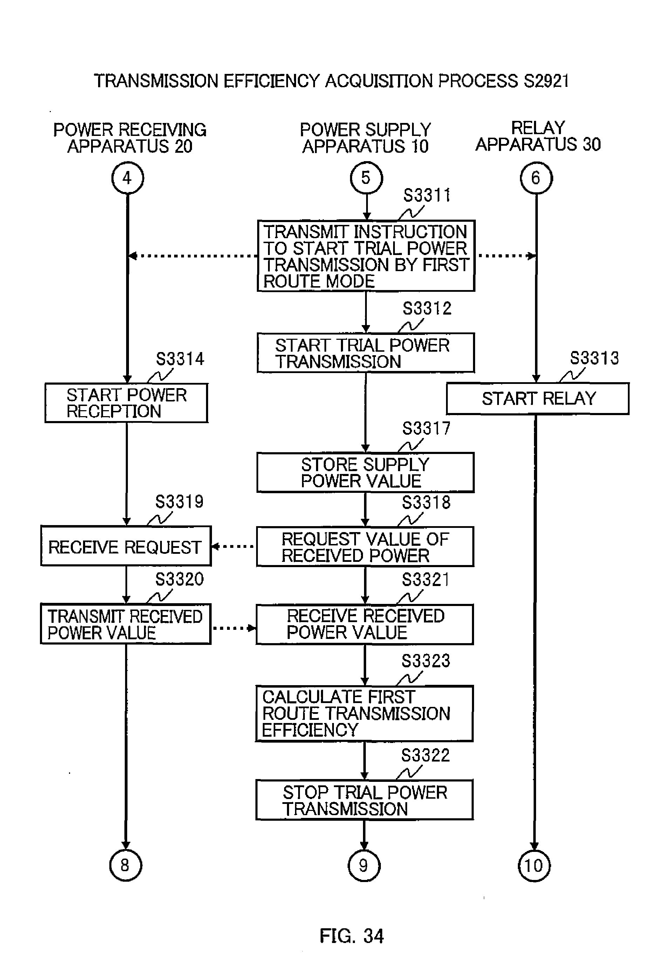

As illustrated in Figure 34, the power supply apparatus 10 transmits an instruction to start the trial power transmission in the first route mode to the power receiving apparatus 20 and the relay apparatus 30 (S3311), and starts the trial power transmission by the first route mode (starts the trial power transmission of the power of the frequency f1) (S3312).

When the instruction is received, the relay apparatus 30 starts the relay of the power received from the power supply apparatus 10 (makes the power receiving circuit 31 resonate with the power supply circuit 14 of the power supply apparatus 10 at the frequency f1, makes the power transmission circuit 32 resonate with the power receiving circuit 21 of the power receiving apparatus 20 at the frequency f2, and transmits the power of the frequency f1 received from the power supply apparatus 10 as the power of the frequency f2) (S3313).

When the instruction is received, the power receiving apparatus 20 starts the power reception in the first route mode (makes the power receiving circuit 21 resonate with the power transmission circuit 32 of the relay apparatus 30 at the frequency f2) (S3314).

When the trial power transmission is started, the power supply apparatus 10 stores a value of the power supplied by the power supply apparatus 10 (a supply power value) (S3317).

Next, the power supply apparatus 10 requests a value of the received power (a value of the power being received) from the power receiving apparatus 20 (S3318). When the request is received (S3319), the power receiving apparatus 20 transmits the value of the received power (the received power value) (S3320).

When the received power value is received from the power receiving apparatus 20 (S3321), the power supply apparatus 10 obtains the first route transmission efficiency on the basis of the supply power value stored in S3317 and the received power value received in S3321 (S3323). Thereafter, the power supply apparatus 10 stops the trial power transmission (S3322).

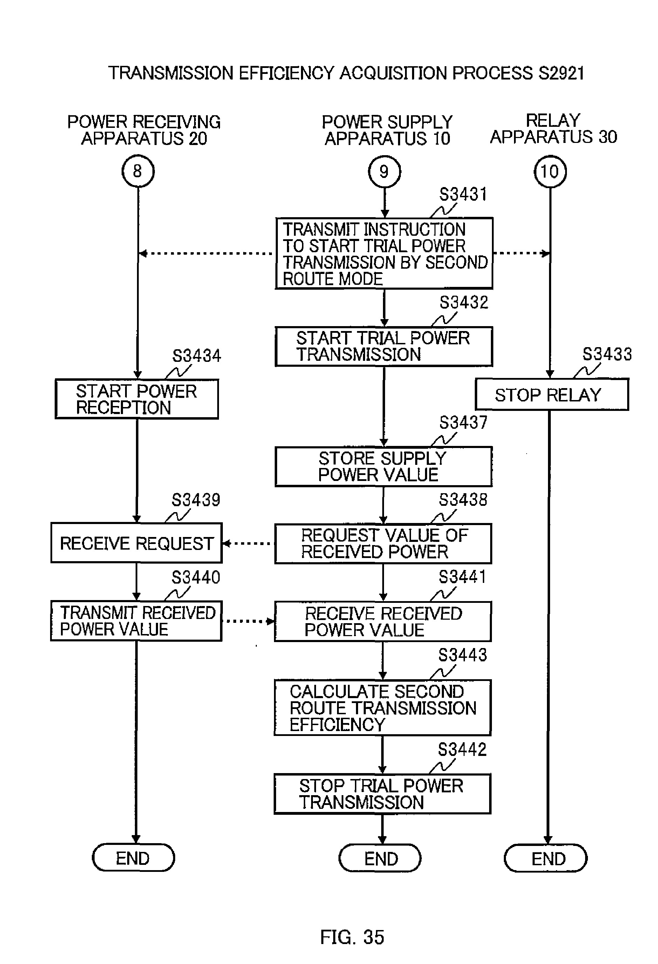

Subsequently, the power supply apparatus 10 transmits an instruction to start the trial power transmission in the second route mode to the power receiving apparatus 20 and the relay apparatus 30 (S3431 in Figure 35), and starts the trial power transmission in the second route mode (starts the trial power transmission of the power of the frequency f1) (S3432).

When the instruction is received, the relay apparatus 30 does not relay the power from the power supply apparatus 10 (does not allow the power receiving circuit 31 to resonate with the power supply circuit 14 of the power supply apparatus 10) (S3433).

When the instruction is received, the power receiving apparatus 20 starts the power reception in the second route mode (makes the power receiving circuit 21 resonate with the power supply circuit 14 of the power supply apparatus 10 at the frequency f1) (S3434).

When the trial power transmission is started, the power supply apparatus 10 stores a value of the power supplied by the power supply apparatus 10 (supply power value) (S3437).

Next, the power supply apparatus 10 requests a value of the received power (a value of the power being received) from the power receiving apparatus 20 (S3438). When the request is received (S3439), the power receiving apparatus 20 transmits the value of the received power (the received power value) (S3440).

When the received power value is received from the power receiving apparatus 20 (S3441), the power supply apparatus 10 obtains the second route transmission efficiency on the basis of the supply power value stored in S3437 and the received power value received in S3441 (S3443). Thereafter, the power supply apparatus 10 stops the trial power transmission (S3442).

In this way, the power supply apparatus 10 mainly performs the comparison of the transmission efficiency and the switching control of the power supply mode so that the configurations of the power receiving apparatus 20 and the relay apparatus 30 can be simplified.

As described above, according to the non-contact power supply system 1 of the second embodiment, since the mode of the maximum transmission efficiency is selected among the combination mode, the first route mode, and the second route mode and the power is supplied from the power supply apparatus 10 to the power receiving apparatus 20, the non-contact power supply can be efficiently performed in the case of providing the relay apparatus 30 and performing the non-contact power supply from the power supply apparatus 10 to the power receiving apparatus 20. Therefore, the non-contact power supply can be efficiently performed even in the case that the transmission efficiency is rather lowered by providing the relay apparatus 30 due to influence of interference of the supply power, multipath, reflected waves, or the like.

Also, in the non-contact power supply system 1 of the second embodiment, since the frequency of the power supplied by the power supply apparatus 10 does not change (the power is supplied at the frequency f1 at all times), the need of providing a mechanism of changing the frequency in the power supply circuit 14 of the power supply apparatus 10 and the power receiving circuit 31 of the relay apparatus 30 is eliminated, and the power supply apparatus 10 and the relay apparatus 30 can be simply configured.

The description of the embodiments described above is to facilitate understanding of the present invention and does not limit the present invention. The present invention may be modified or altered without departing from the scope thereof, and of course the present invention includes its equivalents.

For example, in the embodiments described above, the case of relaying the power supply from the power supply apparatus 10 to the power receiving apparatus 20 by one relay apparatus 30 has been described, however, the present invention may be extended to the case of relaying the power supply from the power supply apparatus 10 to the power receiving apparatus 20 through two or more relay apparatuses 30. That is, for example, the relay apparatuses 30 may be controlled by performing the trial power transmission in a plurality of patterns in which each relay apparatus 30 is individually controlled to be ON/OFF (perform the relay/does not perform the relay), thereby comparing the transmission efficiency of each pattern, and selecting a power supply method of the high transmission efficiency, or may be controlled by performing the trial power transmission in a plurality of patterns in which the plurality or all of the relay apparatuses 30 are simultaneously controlled to be ON/OFF (perform the relay/does not perform the relay), thereby comparing the transmission efficiency of each pattern, and selecting a power supply method of the high transmission efficiency further.

Also, as a method of switching the first route mode and the second route mode, there is a method as follows. For example, in the case of supplying the power in the second route mode, by controlling the orientation of the power receiving circuit of the relay apparatus 30, a received power amount of the supply power by the relay apparatus 30 is attenuated. Also, the switching may be carried out by controlling the received power amount of the supply power transmitted from the power supply apparatus 10 in the power receiving apparatus 20 or the received power amount of the supply power transmitted from the power supply apparatus 10 in the relay apparatus 30. In this case, a mechanism of attenuating the received power amount can be achieved by controlling whether or not to interpose a metallic shield plate (aluminum plate or the like) between the power supply apparatus 10 and the relay apparatus 30, or between the power supply apparatus 10 and the power receiving apparatus 20, for example.

### Reference Signs List

- 1: Non-contact power supply system
- 10: Power supply apparatus
- 14: Power supply circuit
- 20: Power receiving apparatus
- 21: Power receiving circuit
- 30: Relay apparatus
- 31: Power receiving circuit
- 32: Power transmission circuit
- 33: Relay circuit
- 123: Power supply mode selection unit
- 321: Relay control unit

## Claims

1. A non-contact power supply system comprising a power supply apparatus, a power receiving apparatus, and a relay apparatus, wherein
transmission efficiency in the case of performing non-contact power supply in a first route mode which is a mode of not performing direct non-contact power supply from the power supply apparatus to the power receiving apparatus but performing indirect non-contact power supply from the power supply apparatus to the power receiving apparatus through the relay apparatus, and transmission efficiency in the case of performing the non-contact power supply in a second route mode which is a mode of not performing the indirect non-contact power supply from the power supply apparatus to the power receiving apparatus through the relay apparatus but performing the direct non-contact power supply from the power supply apparatus to the power receiving apparatus are acquired, and
the mode of higher transmission efficiency is selected from the first route mode and the second route mode, and the non-contact power supply is performed from the power supply apparatus to the power receiving apparatus.

2. The non-contact power supply system according to claim 1, wherein
the power supply apparatus, the power receiving apparatus, and the relay apparatus transmit or receive the supply power in a magnetic resonance mode,
a power supply circuit of the power supply apparatus and a power receiving circuit of the relay apparatus are made to resonate, a power transmission circuit of the relay apparatus and a power receiving circuit of the power receiving apparatus are made to resonate, and the power supply circuit of the power supply apparatus and the power receiving circuit of the power receiving apparatus are not allowed to resonate, in the case of performing the non-contact power supply in the first route mode, and
the power supply circuit of the power supply apparatus and the power receiving circuit of the power receiving apparatus are made to resonate, and the power supply circuit of the power supply apparatus and the power receiving circuit of the relay apparatus are not allowed to resonate, in the case of performing the non-contact power supply in the second route mode.

3. The non-contact power supply system according to claim 2, wherein
the power supply circuit of the power supply apparatus and the power receiving circuit of the relay apparatus are made to resonate at a second frequency, the power transmission circuit of the relay apparatus and the power receiving circuit of the power receiving apparatus are made to resonate at a first frequency, and the power supply circuit of the power supply apparatus and the power receiving circuit of the power receiving apparatus are not allowed to resonate, in the case of performing the non-contact power supply in the first route mode, and
the power supply circuit of the power supply apparatus and the power receiving circuit of the power receiving apparatus are made to resonate at the first frequency, and the power supply circuit of the power supply apparatus and the power receiving circuit of the relay apparatus are not allowed to resonate, in the case of performing the power supply in the second route mode.

4. The non-contact power supply system according to claim 2, wherein
the power supply circuit of the power supply apparatus and the power receiving circuit of the relay apparatus are made to resonate at a first frequency, the power transmission circuit of the relay apparatus and the power receiving circuit of the power receiving apparatus are made to resonate at a second frequency, and the power supply circuit of the power supply apparatus and the power receiving circuit of the power receiving apparatus are not allowed to resonate, in the case of performing the non-contact power supply in the first route mode, and
the power supply circuit of the power supply apparatus and the power receiving circuit of the power receiving apparatus are made to resonate at the first frequency, and the power supply circuit of the power supply apparatus and the power receiving circuit of the relay apparatus are not allowed to resonate, in the case of performing the power supply in the second route mode.

5. The non-contact power supply system according to claim 2, wherein
whether or not to make the power supply circuit of the power supply apparatus and the power receiving circuit of the relay apparatus resonate, and whether or not to make the power transmission circuit of the relay apparatus and the power receiving circuit of the power receiving apparatus resonate are carried out by changing capacitance of a capacitive element or inductance of an inductive element for at least one of the power supply circuit of the power supply apparatus, the power receiving circuit of the relay apparatus, the power transmission circuit of the relay apparatus, and the power receiving circuit of the power receiving apparatus.

6. The non-contact power supply system according to claim 1, wherein
the relay apparatus includes a mechanism of controlling orientation of a power receiving circuit that receives supply power transmitted from the power supply apparatus, and
a received power amount of the supply power in the relay apparatus is attenuated by controlling the orientation of the power receiving circuit of the relay apparatus, in the case of performing the non-contact power supply in the second route mode.

7. The non-contact power supply system according to claim 1, comprising
a first attenuation control unit that attenuates a received power amount of supply power transmitted from the power supply apparatus in the relay apparatus, and a second attenuation control unit that attenuates a received power amount of supply power transmitted from the power supply apparatus in the power receiving apparatus, wherein
the received power amount of the supply power transmitted from the power supply apparatus in the power receiving apparatus is attenuated by the second attenuation control unit, in the case of performing the non-contact power supply in the first route mode, and
the received power amount of the supply power transmitted from the power supply apparatus in the relay apparatus is attenuated by the first attenuation control unit, in the case of performing the non-contact power supply in the second route mode.

8. The non-contact power supply system according to claim 7, wherein
the first attenuation control unit attenuates the received power amount of the supply power transmitted from the power supply apparatus in the relay apparatus by interposing a shield between the power supply apparatus and the relay apparatus, and
the second attenuation control unit attenuates the received power amount of the supply power transmitted from the power supply apparatus in the power receiving apparatus by interposing a shield between the power supply apparatus and the power receiving apparatus.

9. The non-contact power supply system according to claim 1, wherein
the transmission efficiency in the first route mode, the transmission efficiency in the second route mode, and transmission efficiency in the case of performing the non-contact power supply in a combination mode which is a mode of performing the direct non-contact power supply from the power supply apparatus to the power receiving apparatus and performing the indirect non-contact power supply from the power supply apparatus to the power receiving apparatus through the relay apparatus are acquired, and
the mode of the maximum transmission efficiency is selected among the first route mode, the second route mode, and the combination mode, and the non-contact power supply is performed from the power supply apparatus to the power receiving apparatus.

10. A control method for a non-contact power supply system including a power supply apparatus, a power receiving apparatus, and a relay apparatus, comprising the steps of:
by the non-contact power supply system,
acquiring transmission efficiency in the case of performing non-contact power supply in a first route mode which is a mode of not performing direct non-contact power supply from the power supply apparatus to the power receiving apparatus but performing indirect non-contact power supply from the power supply apparatus to the power receiving apparatus through the relay apparatus, and transmission efficiency in the case of performing the non-contact power supply in a second route mode which is a mode of not performing the indirect non-contact power supply from the power supply apparatus to the power receiving apparatus through the relay apparatus but performing the direct non-contact power supply from the power supply apparatus to the power receiving apparatus; and
selecting the mode of higher transmission efficiency from the first route mode and the second route mode, and performing the non-contact power supply from the power supply apparatus to the power receiving apparatus.

11. The control method for the non-contact power supply system according to claim 10, wherein
the power supply apparatus, the power receiving apparatus, and the relay apparatus transmit or receive the supply power in a magnetic resonance mode, and
the non-contact power supply system
makes a power supply circuit of the power supply apparatus and a power receiving circuit of the relay apparatus resonate, makes a power transmission circuit of the relay apparatus and a power receiving circuit of the power receiving apparatus resonate, and does not allow the power supply circuit of the power supply apparatus and the power receiving circuit of the power receiving apparatus to resonate, in the case of performing the non-contact power supply in the first route mode, and
makes the power supply circuit of the power supply apparatus and the power receiving circuit of the power receiving apparatus resonate, and does not allow the power supply circuit of the power supply apparatus and the power receiving circuit of the relay apparatus to resonate, in the case of performing the non-contact power supply in the second route mode.

12. The control method for the non-contact power supply system according to claim 11, wherein
the non-contact power supply system
makes the power supply circuit of the power supply apparatus and the power receiving circuit of the relay apparatus resonate at a second frequency, makes the power transmission circuit of the relay apparatus and the power receiving circuit of the power receiving apparatus resonate at a first frequency, and does not allow the power supply circuit of the power supply apparatus and the power receiving circuit of the power receiving apparatus to resonate, in the case of performing the non-contact power supply in the first route mode, and
makes the power supply circuit of the power supply apparatus and the power receiving circuit of the power receiving apparatus resonate at the first frequency, and does not allow the power supply circuit of the power supply apparatus and the power receiving circuit of the relay apparatus to resonate, in the case of performing the power supply in the second route mode.

13. The control method for the non-contact power supply system according to claim 11, wherein
the non-contact power supply system
makes the power supply circuit of the power supply apparatus and the power receiving circuit of the relay apparatus resonate at a first frequency, makes the power transmission circuit of the relay apparatus and the power receiving circuit of the power receiving apparatus resonate at a second frequency, and does not allow the power supply circuit of the power supply apparatus and the power receiving circuit of the power receiving apparatus to resonate, in the case of performing the non-contact power supply in the first route mode, and
makes the power supply circuit of the power supply apparatus and the power receiving circuit of the power receiving apparatus resonate at the first frequency, and does not allow the power supply circuit of the power supply apparatus and the power receiving circuit of the relay apparatus to resonate, in the case of performing the power supply in the second route mode.
